# EUROPEAN PATENT APPLICATION

(11) **EP 0 991 070 A2**
(43) Date of publication of application: **05.04.2000**
(21) Application number: 99118481.3
(22) Date of filing: 17.09.1999
(51) Int. Cl.: G11B 27/031, H04N 5/262

(54) **Audio video edition system**

(30) Priority: 18.09.1998 JP 26376698; 28.09.1998 JP 27238098; 09.10.1998 JP 28714098; 09.10.1998 JP 28714198
(71) Applicant: Matsushita Electric Industrial Co., Ltd., Kadoma-shi, Osaka 571-8501 (JP)
(72) Inventor: Mino, Mineo, c/o Matsushita Elect. Ind. Co., Ltd., Kadoma-shi, Osaka-fu, 571-8501 (JP); Mizukawa, Yousuke, Kadoma-shi, Osaka-fu 571-8501 (JP)
(74) Representative: Grünecker, Kinkeldey, Stockmair & Schwanhäusser Anwaltssozietät

(57) **Abstract**

In using a memory disc to edit VCR signals, an audio video edition system directly interfaces the memory disc in a disc device with an IEEE 1394 bus to set recording regions on the memory disc for audio and video digital stream signals in such a way that the recording regions for such digital stream signals are continuous and to record only digital stream signals in these regions, thereby maintaining the continuity of data in recording and reproducing the digital stream signals and allowing the stream signals to be edited without changing their digital signal status. This configuration enables sounds and videos from a digital VCR to be edited more inexpensively and more efficiently than in the prior art, while increasing the edition speed.

## Description

### Field of the Invention

The present invention relates to an audio video edition system for digitally editing sounds and videos from a video cassette recorder using a memory disc such as a hard disc that is a recording medium.

### Background of the Invention

To edit sounds and videos recorded on a magnetic tape wound in a cassette as a recording medium using, for example, a desk-top VCR or a camcorder that records and reproduces sounds and videos, an audio video edition system is conventionally used that can reproduce sounds and videos from the magnetic tape by means of the VCR and that can digitally edit the sounds and videos using a memory disc such as a hard disc that is another recording medium.

Such a conventional audio video edition system will be described below. By way of example, a case is explained in which as the above VCR, a digital VCR is used to digitally record and reproduce sounds and videos on and from a recording medium such as a magnetic tape.

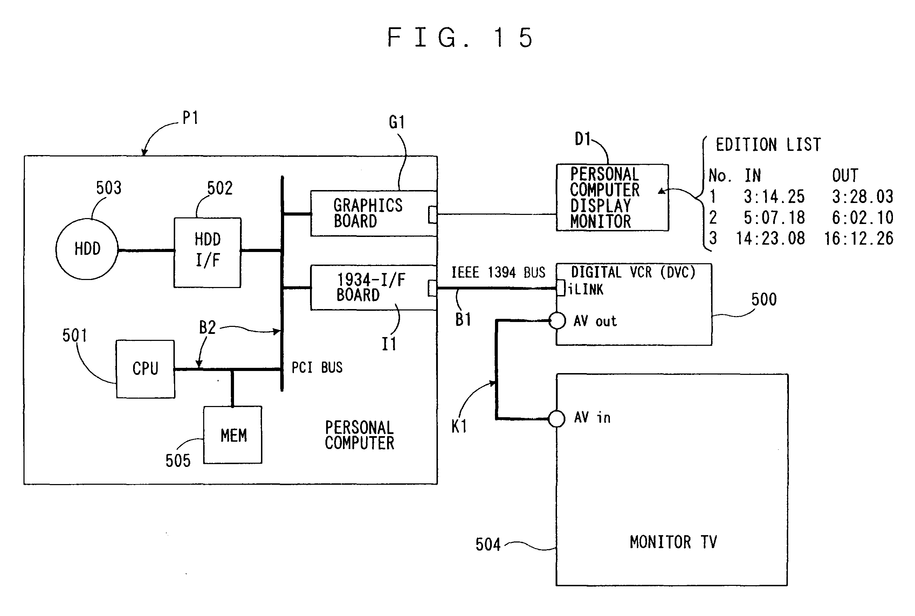

In this audio video edition system, as shown in FIG. 15, a digital VCR (DVC) 500 and a personal computer P1 are connected through a single bus line (a digital stream bus for sounds and videos standardized according to IEEE 1394 and hereafter simply referred to as an "IEEE 1394 bus B1") and each comprises a digital interface capable of using a method specified for the IEEE 1394 bus B1 to input from and output to the IEEE 1394 bus B1 all digital data including an AV digital stream signal comprising audio and video digital stream signals that are DVC-compressed by the DVC 500; and a control signal comprising DVC 500 controlling commands and DVC 500 status signals, as well as its interface circuit.

When a user operates the personal computer for edition, a CPU 501 controls the DVC 500 to transmit an AV digital stream signal to the personal computer P1 through the IEEE 1394 bus B1. This AV digital stream signal is recorded on a hard disc (HDD) 503 via a 1394-I/F board I1 in the personal computer 1 on which the digital interface and its interface circuit are configured, through a PCI bus B2 acting as an internal bus in the personal computer P1, and via an HDD I/F 502.

As described above, an AV digital stream signal comprises an audio and a video digital stream signals and assumes a continuous signal form on the IEEE 1394 bus B1. However, in an edition system using, for example, the personal computer P1, non-linear edition is used as an edition is used method, and during recording on the HDD 503, various data are recorded at different positions on the HDD 503 depending on the circumstances.

Thus, an AV digital stream signal, which is continuous on the IEEE 1394 bus B1, is difficult to continuously record on the HDD 503 and is actually discontinuously recorded thereon.

When the user subsequently operates the personal computer, the CPU 501 provides further control to reproduce the AV digital stream signal from the HDD 503. The signal is sent through the HDD I/F 502 and the PCI bus B2 via the 1394-I/F board I1 and the digital interface through the IEEE 1394 bus B1 to the DVC 500, where it is decoded by a codec (not shown) and converted into an analog video signal. The signal is then applied to a monitor TV 504 through a connection cable K1.

When the user operates the personal computer to determine programs at an edition cut-in (start) and cut-out (end) points while monitoring relevant images reproduced on the monitor TV 504, the CPU 501 controls so that these programs are displayed as an edition list on a personal computer display monitor D1 via a graphics board G1 to edit and reproduce the AV digital stream signal from the HDD 503 according to the programs. While being saved in a memory (MEM) 505 via the HDD I/F 502 and the PCI bus B2, the AV digital stream signal is transmitted via the PCI bus B2, the 1394-I/F board I1, and the digital interface through the IEEE 1394 bus B1 through the IEEE 1394 bus B1 to the DVC 500, where the edited sounds and videos are recorded.

In this manner, the DVC 500 is used to edit sounds and videos recorded on the recording medium.

Well-known audio video edition systems of this kind has the following disadvantages.

In the conventional example shown in FIG. 15, the personal computer P1 edits sounds and videos from the DVC 500 using the HDD 503. Thus, even to allow the personal computer P1 to load only the AV digital stream signal on the HDD 503, the internal bus, the HDD 503, and the HDD I/F 502 must each be able to operate at a high speed, thereby increasing costs for an edition system.

In addition, since various data other than AV digital stream signals are recorded at different positions on the HDD 503 of the personal computer P1, an AV digital stream signal, which is continuous on the IEEE 1394 bus B1, is difficult to continuously record on the HDD 503. An AV digital stream signal recorded in such a manner is eventually discontinuous during reproduction and a retry operation is performed to prevent recording mistakes, so sounds and videos from the DVC 500 are temporally inefficiently edited.

### Disclosure of the Invention

The present invention has been provided in view of these disadvantages, and its object is to provide an audio video edition system capable of inexpensively and efficiently editing sounds and videos from a digital VCR and increasing the editing speed compared to the prior art.

To attain this object, an audio video edition system according to Claim 1 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input from the memory disc device to the digital VCR through the stream bus, wherein the digital VCR comprises a bus interface capable of using a specified method to input from and output to the stream bus all data corresponding to AV/subcode digital stream signals comprising audio and video digital stream signals that are DVC-compressed and output from the digital VCR and subcode digital stream signals including time codes, the data also corresponding to control signals comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signals and control signals, a disc interface means capable of recording and reproducing all data corresponding to the AV/subcode digital stream signals and control signals from the bus interface means, on and from the memory disc in the units of video signal frames, and an interface control means for operating and controlling the bus and disc interface means using the control signals, whereby the interface control means controls and operates the digital VCR and the memory disc device to record all or part of an AV/subcode digital stream signal from the digital VCR on the memory disc through the stream bus and the bus and disc interface means; the memory disc is subsequently reproduced to transmit the AV/subcode digital stream signal obtained through the disc and bus interface means and stream bus to the digital VCR; a VCR codec provided inside the digital VCR and having a decoder decodes and converts the AV/subcode digital stream signal into analog video signals, which are then applied to a monitor TV; and while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs.

In addition, an audio video edition system according to Claim 2 of the present invention is characterized in that the memory disc device set forth in Claim 1 comprises a time code detection means controlled by the interface control means to detect and obtain from a subcode digital stream signal, time codes corresponding to the edition cut-in and cut-out points, a time code memory means for storing the time codes from the time code detection means, and a display for displaying the contents of the time code memory means, and further comprises a display control means for controlling the display to display the time codes corresponding to the number of programs comprising the cut-in and cut-out points so that edition is carried out while monitoring relevant images reproduced on the monitor TV and an edition list displayed on the display so as to correspond to edition programs for the images.

In addition, an audio video edition system according to Claim 3 of the present invention is characterized in that the memory disc device set forth in Claim 2 comprises an input means for receiving analog video signals from the digital VCR, a character video generation means for generating character video signals by converting the edition cut-in and cut-out points based on the time codes in the time code memory means as well as character information for each program number into character displaying video signals, a superimpose means for generating analog video signals by superimposing the character video signals from the character video generation means on the analog video signals from the input means, and an output means for outputting the analog video signals from the superimpose means, and in that the analog video signals from the output means are applied to the monitor TV so that edition is carried out while monitoring relevant images reproduced on the monitor TV and an edition list corresponding to edition programs.

In addition, an audio video edition system according to Claim 4 of the present invention is characterized in that the memory disc device set forth in Claim 3 is configured so that the interface means reproduces from the AV/subcode digital stream signal in the memory disc, DC-component small-screen information comprising a plurality of rough sampling images in such a way as to correspond to the edition cut-in and cut-out points and each program point, in that the memory disc device comprises a small-screen decode means for decoding the small-screen information into small-screen video signals corresponding to the information, a mix means controlled by the display control means to output to the output means video signals for picture-in-picture screens created by mixing the small-screen video signals from the small-screen decode means with the analog video signals from the digital VCR input through the input means, and a small-screen creation memory means for temporarily storing various data such as still images that are based on the small-screen video signals and that are required for the creation operation when the mix means creates the picture-in-picture screens, and in that the video signals for picture-in-picture screens from the mix means are applied to the monitor TV through the output means so that edition is carried out while monitoring relevant images reproduced on the monitor TV and small edition screens corresponding to edition programs.

In addition, an audio video edition system according to Claim 5 of the present invention is characterized in that the memory disc device set forth in Claim 3 comprises a small-screen creation means controlled by the display control means to create still-image small-screen signals by decimating analog video signals from the digital VCR input from the input means in such a way as to correspond to the edition cut-in and cut-out points and each program number, a small-screen creation memory means for temporarily storing the still-image small-screen signals from the small-screen creation means, a mix means controlled by the display control means to output to the output means video signals for picture-in-picture screens created by mixing the still-image small-screen signals from the small-screen creation means with the analog video signals from the digital VCR, and in that the video signals for picture-in-picture screens from the mix means are applied to the monitor TV through the output means so that edition is carried out while monitoring relevant images reproduced on the monitor TV and small edition screens corresponding to edition programs.

In addition, an audio video edition system according to Claim 6 of the present invention is characterized in that the memory disc device set forth in Claim 1, 2, 3, 4, or 5 comprises a light receiving means for receiving emissions for operations and commands from an external remote controller as signals for operations and control executed by the interface control means so that the interface control means is remote-controlled by the remote controller through the display control means based on the light signals received by the light receiving means and corresponding to operations and commands, so as to execute operations and control based on the operations and commands from the remote controller.

In addition, an audio video edition system according to Claim 7 of the present invention is characterized in that the bus interface means is adapted to connect to one end of a stream bus different from the stream bus between the memory disc device set forth in Claim 1, 2, 3, 4, or 5 and the digital VCR and to use a specified method to also input from and output to the different stream bus, data corresponding to an AV/subcode digital stream signal and a control signal, and in that the memory disc device is controlled and operated for edition by a personal computer having an interface connected to the other end of the different stream bus so as to use the specified method to input from and output to the different stream bus, the data corresponding to the AV/subcode digital stream signal and control signal.

In addition, an audio video edition system according to Claim 8 of the present invention is characterized in that the bus interface means is adapted to connect to one end of a stream bus different from the stream bus between the memory disc device set forth in Claim 6 and the digital VCR and to use a specified method to also input from and output to the different stream bus, data corresponding to an AV/subcode digital stream signal and a control signal, and in that the memory disc device is controlled and operated for edition by a personal computer having an interface connected to the other end of the different stream bus so as to use the specified method to input from and output to the different stream bus, the data corresponding to the AV/subcode digital stream signal and control signal.

According to such an apparatus, in using the memory disc to edit sounds and videos from the digital VCR, the memory disc in the memory disc device can be directly interfaced with the stream bus standardized for sounds and videos to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited while in a digital signal state.

In addition, an audio video edition system according to Claim 9 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding as audio and video digital stream signals to AV/subcode digital stream signals comprising audio and video digital stream signals that are DVC-compressed and output from the digital VCR and subcode digital stream signals including time codes, the data also corresponding to control signals comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signals and control signals, a disc interface means capable of recording and reproducing all data corresponding to the AV/subcode digital stream signals and control signals from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signals based on the audio and video analog signals from the input means, an analog video signal generation means controlled by the interface control means to generate audio and video analog signals using the AV/subcode digital stream signals from the memory disc, and an output means for outputting the audio and video analog signals from the analog video signal generation means, whereby the interface control means controls and operates the digital VCR and the memory disc device to record all or part of an AV/subcode digital stream signal from the digital VCR on the memory disc through the stream bus and the bus and disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; and the audio and video analog signals based on the edited AV/subcode digital stream signal can be recorded on an analog VCR connected through the output terminal, while the edited AV/subcode digital stream signal can be recorded on the digital VCR through the bus interface means and the stream bus.

In addition, an audio video edition system according to Claim 10 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding to an AV/subcode digital stream signal as audio and video digital stream signals comprising audio and video digital stream signals that are DVC-compressed and output from the digital VCR and subcode digital stream signals including time codes, the data also corresponding to a control signal comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signal and control signal, a disc interface means capable of recording and reproducing all data corresponding to the AV/subcode digital stream signal and control signal from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signal based on the audio and video analog signals from the input means, an analog video signal generation means controlled by the interface control means to generate audio and video analog signals using the AV/subcode digital stream signal reproduced from the memory disc, and an output means for outputting the audio and video analog signals from the analog video signal generation means, whereby the interface control means controls and operates the digital VCR and the memory disc device to record an AV/subcode digital stream signal obtained from AV/subcode digital stream signal generation means, on the memory disc through the disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; and the audio and video analog signals based on the edited AV/subcode digital stream signal can be recorded on an analog VCR connected through the output terminal, while the edited AV/subcode digital stream signal can be recorded on the digital VCR through the bus interface means and the stream bus.

In addition, an audio video edition system according to Claim 11 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding to an AV/subcode digital stream signal as audio and video digital stream signals comprising audio and video digital stream signals that are DVC-compressed and output from the digital VCR and subcode digital stream signals including time codes, the data also corresponding to a control signal comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signal and control signal, a disc interface means capable of recording and reproducing all data corresponding to the AV/subcode digital stream signal and control signal from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signal based on the audio and video analog signals from the input means, an analog video signal generation means controlled by the interface control means to generate audio and video analog signals using the AV/subcode digital stream signal from the memory disc, and an output means for outputting the audio and video analog signals from the analog video signal generation means, whereby the interface control means controls and operates the digital VCR and the memory disc device to record all or part of an AV/subcode digital stream signal from the digital VCR on the memory disc through the stream bus and the bus and disc interface means and records an AV/subcode digital stream signal into which analog signals from the input means are converted, on the memory disc through the disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; and the audio and video analog signals based on the edited AV/subcode digital stream signal can be recorded on an analog VCR connected through the output terminal, while the edited AV/subcode digital stream signal can be recorded on the digital VCR through the bus interface means and the stream bus.

In addition, an audio video edition system according to Claim 12 of the present invention is characterized in that the memory disc device set forth in Claim 9, 10, or 11 comprises a time code detection means controlled by the interface control means to detect and obtain from a subcode digital stream signal, time codes corresponding to the edition cut-in and cut-out points, a time code memory means for storing the time codes from the time code detection means, and a display for displaying the contents of the time code memory means, and further comprises a display control means for controlling the display to display the time codes corresponding to the number of programs comprising the cut-in and cut-out points so that edition is carried out while monitoring relevant images reproduced on the monitor TV and an edition list displayed on the display so as to correspond to edition programs for the images.

In addition, an audio video edition system according to Claim 13 of the present invention is characterized in that the memory disc device set forth in Claim 12 comprises a character video generation means for generating character video signals by converting the edition cut-in and cut-out points based on the time codes in the time code memory means as well as character information for each program number into character displaying video signals, a superimpose means for generating analog video signals by superimposing the character video signals from the character video generation means on the analog video signals from the analog video signal generation means, a first output means for outputting the analog video signals from the superimpose means, and a second output means for outputting the analog video signals from the analog video signal generation means, and in that the analog video signals from the first output means are applied to the monitor TV so that edition is carried out while monitoring relevant reproduced images and an edition list corresponding to edition programs.

In addition, an audio video edition system according to Claim 14 of the present invention is characterized in that the memory disc device set forth in Claim 13 comprises a small-screen creation means controlled by the display control means to create still-image small-screen signals by decimating analog video signals from the analog video signal generation means in such a way as to correspond to the edition cut-in and cut-out points and each program number, a small-screen creation memory means for temporarily storing the still-image small-screen signals from the small-screen creation means, a mix means controlled by the display control means to output to the first output means video signals for picture-in-picture screens created by mixing the still-image small-screen signals from the small-screen creation means with the analog video signals from the analog video signal generation means, and in that the video signals for picture-in-picture screens from the mix means are applied to the monitor TV through the first output means so that edition is carried out while monitoring relevant images reproduced on the monitor TV and small edition screens corresponding to edition programs.

In addition, an audio video edition system according to Claim 15 of the present invention is characterized in that the memory disc device set forth in Claim 9, 10, 11, 13, or 14 comprises a light receiving means for receiving emission for operations and commands from an external remote controller as signals for operations and control executed by the interface control means so that the interface control means is remote-controlled by the remote controller through the display control means based on the light signals received by the light receiving means and corresponding to operations and commands, so as to execute operations and control based on the operations and commands from the remote controller.

In addition, an audio video edition system according to Claim 16 of the present invention is characterized in that the memory disc device set forth in Claim 12 comprises a light receiving means for receiving emissions for operations and commands from an external remote controller as signals for operations and control executed by the interface control means so that the interface control means is remote-controlled by the remote controller through the display control means based on the light signals received by the light receiving means and corresponding to operations and commands, so as to execute operations and control based on the operations and commands from the remote controller.

In addition, an audio video edition system according to Claim 17 of the present invention is characterized in that the bus interface means is adapted to connect to one end of a stream bus different from the stream bus between the memory disc device set forth in Claim 9, 10, 11, 13, 14, or 16 and the digital VCR and to use a specified method to also input from and output to the different stream bus, data corresponding to an AV/subcode digital stream signal and a control signal, and in that the memory disc device is controlled and operated for edition by a personal computer having an interface connected to the other end of the different stream bus so as to use the specified method to input from and output to the different stream bus, the data corresponding to the AV/subcode digital stream signal and control signal.

In addition, an audio video edition system according to Claim 18 of the present invention is characterized in that the bus interface means is adapted to connect to one end of a stream bus different from the stream bus between the memory disc device set forth in Claim 12 and the digital VCR, and to use a specified method to also input from and output to the different stream bus, data corresponding to an AV/subcode digital stream signal and a control signal, and in that the memory disc device is controlled and operated for edition by a personal computer having an interface connected to the other end of the different stream bus so as to use the specified method to input from and output to the different stream bus, the data corresponding to the AV/subcode digital stream signal and control signal.

In addition, an audio video edition system according to Claim 19 of the present invention is characterized in that the bus interface means is adapted to connect to one end of a stream bus different from the stream bus between the memory disc device set forth in Claim 15 and the digital VCR, and to use a specified method to also input from and output to the different stream bus, data corresponding to an AV/subcode digital stream signal and a control signal, and in that the memory disc device is controlled and operated for edition by a personal computer having an interface connected to the other end of the different stream bus so as to use the specified method to input from and output to the different stream bus, the data corresponding to the AV/subcode digital stream signal and control signal.

According to such an apparatus, in using the memory disc to edit sounds and videos from the digital or analog VCR that is an information source, the memory disc in the memory disc device can be directly interfaced with the stream bus standardized for sounds and videos to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited while in a digital signal state. In addition, an AV/subcode digital stream signal and a control signal can also be generated and recorded on the memory disc based on audio and video analog signals input by the AV/subcode digital stream signal generation means through the external input means under the control of the interface control means. On the contrary, audio and video analog signals can be generated and output from the output means using an AV/subcode digital stream signal reproduced from the memory disc by the analog video signal generation means under the control of the interface control means. The analog video signals can applied to the monitor TV or another analog VCR so that edition is carried out while monitoring relevant images reproduced on the monitor TV and so that the analog VCR connected to the input and output means can also execute recording and reproduction through these means, similarly as the digital VCR.

In addition, an audio video edition system according to Claim 20 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding as audio and video digital stream signals to AV/subcode digital stream signals comprising audio and video digital stream signals that are DVC-compressed and output from the digital VCR and subcode digital stream signals including time codes, the data also corresponding to control signals comprising digital VCR controlling commands and status signals for the digital VCR, the digital VCR further comprising a bus interface circuit used by the bus interface to input and output the data; the memory disc device is directly connected to the stream bus and comprises a bus interface means capable of using the specified method to input from and output to the stream bus all data corresponding to the AV/subcode digital stream signals and control signals, a disc interface means capable of recording and reproducing all data corresponding to the AV/subcode digital stream signals and control signals from the bus interface means, on and from the memory disc in the units of video signal frames, an interface control means for operating and controlling the bus and disc interface means using the control signals, an analog audio input means for inputting only analog audio signals that are audio information in an analog signal form, an A/D converter for converting the analog audio signals from the analog audio input means into digital audio signals, an encoder for DV-compressing the digital audio signals from the A/D converter into PCM audio signals, and a recording means for recording the PCM audio signals from the encoder on the memory disc through the disc interface means, whereby the interface control means controls and operates the digital VCR and the memory disc device to record all or part of an AV/subcode digital stream signal from the digital VCR on the memory disc through the stream bus and the bus and disc interface means; the memory disc is subsequently reproduced to transmit the AV/subcode digital stream signal obtained, through the disc and bus interface means and the stream bus to the digital VCR; a VCR codec provided inside the digital VCR and having a decoder decodes and converts the AV/subcode digital stream signal into analog video signals, which are then applied to a monitor TV; while relevant images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; after the edition of the AV/subcode digital stream signal and when re-editing only the audio digital stream signals in the AV/subcode digital stream signal recorded on the memory disc, the memory disc device converts analog audio signals from the analog audio input means into the PCM audio signals using the A/D converter, the encoder, and the recording means, records this audio digital stream signal on the memory disc through the disc interface means, reproduces the AV/subcode digital stream signal recorded on the memory disc using the interface control means, and transmits the signal to the digital VCR through the disc and bus interface means and the stream bus; and the audio digital stream signals in the AV/subcode digital stream signal are monitored, while replacing, with timings controlled by the interface control means, some of the audio digital stream signals in the AV/subcode digital stream signal recorded on the memory disc with audio digital stream signals converted based on the analog audio signals from the analog audio input means.

In addition, an audio video edition system according to Claim 21 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding to an AV/subcode digital stream signal as audio and video digital stream signals comprising audio and video digital stream signals that are DVC-compressed and output from the digital VCR and subcode digital stream signals including time codes, the data also corresponding to a control signal comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signal and control signal, a disc interface means capable of recording and reproducing all data corresponding to the AV/subcode digital stream signal and control signal from the bus interface means, on and from the memory disc in the units of video signal frames, an interface control means for operating and controlling the bus and disc interface means using the control signals, an analog audio input means for inputting only analog audio signals that are audio information in an analog signal form, an A/D converter for converting the analog audio signals from the analog audio input means into digital audio signals, an encoder for DV-compressing the digital audio signals from the A/D converter into PCM audio signals, and a recording means for recording the PCM audio signals from the encoder on the memory disc through the disc interface means, whereby the interface control means controls and operates the digital VCR and the memory disc device to record all or part of an AV/subcode digital stream signal from the digital VCR on the memory disc through the stream bus and the bus and disc interface means; the memory disc is subsequently reproduced to transmit the AV/subcode digital stream signal obtained, through the disc and bus interface means and the stream bus to the digital VCR; a VCR codec provided inside the digital VCR and having a decoder decodes and converts the AV/subcode digital stream signal into analog video signals, which are then applied to a monitor TV; while relevant images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; after the edition of the AV/subcode digital stream signal and when re-editing only the audio digital stream signals in the AV/subcode digital stream signal recorded on the memory disc, the interface control means reproduces the AV/subcode digital stream signal recorded on the memory disc and transmits the signal to the digital VCR through the disc and bus interface means and the stream bus; and the audio digital stream signals in the AV/subcode digital stream signal are monitored, while replacing, with timings controlled by the interface control means, some of the audio digital stream signals in the AV/subcode digital stream signal recorded on the memory disc with audio digital stream signals converted based on the analog audio signals from the analog audio input means.

In addition, an audio video edition system according to Claim 22 of the present invention is characterized in that in order to edit sounds and videos input to the memory disc device set forth in Claim 20 or 21, the memory disc device comprises a time code detection means controlled by the interface control means to detect and obtain from a subcode digital stream signal, time codes corresponding to the edition cut-in and cut-out points, a time code memory means for storing the time codes from the time code detection means, and a display for displaying the contents of the time code memory means and further comprises a display control means for controlling the display to display the time codes corresponding to the number of programs comprising the cut-in and cut-out points so that edition is carried out while monitoring relevant images reproduced on the monitor TV and an edition list displayed on the display so as to correspond to edition programs for the images.

In addition, an audio video edition system according to Claim 23 of the present invention is characterized in that the memory disc device set forth in Claim 22 comprises an input means for inputting analog video signals from the digital VCR, a character video generation means for generating character video signals by converting the edition cut-in and cut-out points based on the time codes in the time code memory means as well as character information for each program number into character displaying video signals, a superimpose means for generating analog video signals by superimposing character video signals from the character video generation means on analog video signals from the input means, and an output means for outputting the analog video signals from the superimpose means, all these means being used to edit sounds and videos input to the memory disc device, and in that the analog video signals from the output means are applied to the monitor TV so that edition is carried out while monitoring relevant images reproduced on the monitor TV and an edition list corresponding to edition programs.

In addition, an audio video edition system according to Claim 24 of the present invention is characterized in that the memory disc device set forth in Claim 23 is configured so that in editing sounds and videos input to the memory disc device, the interface control means reproduces from the AV/subcode digital stream signal in the memory disc, DC-component small-screen information comprising a plurality of rough sampling images in such a way as to correspond to the edition cut-in and cut-out points and each program point and each program number, in that the memory disc device comprises a small-screen decode means for decoding the small-screen information into small-screen video signals corresponding to the information, a mix means controlled by the display control means to output to the output means video signals for picture-in-picture screens created by mixing small-screen video signals from the small-screen decode means with analog video signals from the digital VCR input through the input means, and a small-screen creation memory means for temporarily storing various data such as still images that are based on the small-screen video signals and that are required for the creation operation when the mix means creates the picture-in-picture screens, and in that the video signals for picture-in-picture screens from the mix means are applied to the monitor TV through the output means so that edition is carried out while monitoring relevant images reproduced on the monitor TV and small edition screens corresponding to edition programs.

In addition, an audio video edition system according to Claim 25 of the present invention is characterized in that the memory disc device set forth in Claim 23 comprises a small-screen creation means controlled by the display control means to create still-image small-screen signals by decimating analog video signals from the digital VCR input from the input means in such a way as to correspond to the edition cut-in and cut-out points and each program number, a small-screen creation memory means for temporarily storing the still-image small-screen signals from the small-screen creation means, and a mix means controlled by the display control means to output to the output means video signals for picture-in-picture screens created by mixing the still-image small-screen signals from the small-screen creation means with the analog video signals from the digital VCR, all these means being used to edit sounds and videos input to the memory disc device, and in that the video signals for picture-in-picture screens from the mix means are applied to the monitor TV through the output means so that edition is carried out while monitoring relevant images reproduced on the monitor TV and small edition screens corresponding to edition programs.

In addition, an audio video edition system according to Claim 26 of the present invention is characterized in that the memory disc device set forth in Claim 20, 21, 23, 24, or 25 comprises a light receiving means for receiving emissions for operations and commands from an external remote controller as signals for operations and control executed by the interface control means so that in editing sounds and videos input to the memory disc device, the interface control means is remote-controlled by the remote controller through the display control means based on the light signals received by the light receiving means and corresponding to operations and commands, so as to execute operations and control based on the operations and commands from the remote controller.

In addition, an audio video edition system according to Claim 27 of the present invention is characterized in that the memory disc device set forth in Claim 22 comprises a light receiving means for receiving emissions for operations and commands from an external remote controller as signals for operations and control executed by the interface control means so that in editing sounds and videos input to the memory disc device, the interface control means is remote-controlled by the remote controller through the display control means based on the light signals received by the light receiving means and corresponding to operations and commands, so as to execute operations and control based on the operations and commands from the remote controller.

In addition, an audio video edition system according to Claim 28 of the present invention is characterized in that the bus interface means is adapted to connect to one end of a stream bus different from the stream bus between the memory disc device set forth in Claim 20, 21, 23, 24, 25, or 27 and the digital VCR and to use a specified method to also input from and output to the different stream bus, data corresponding to an AV/subcode digital stream signal and a control signal and in that in editing sounds and videos input to the memory disc device, the memory disc device is controlled and operated for edition by a personal computer having an interface connected to the other end of the different stream bus so as to use the specified method to input from and output to the different stream bus, the data corresponding to the AV/subcode digital stream signal and control signal.

In addition, an audio video edition system according to Claim 29 of the present invention is characterized in that the bus interface means is adapted to connect to one end of a stream bus different from the stream bus between the memory disc device set forth in Claim 22 and the digital VCR, and to use a specified method to also input from and output to the different stream bus, data corresponding to an AV/subcode digital stream signal and a control signal, and in that in editing sounds and videos input to the memory disc device, the memory disc device is controlled and operated for edition by a personal computer having an interface connected to the other end of the different stream bus so as to use the specified method to input from and output to the different stream bus, the data corresponding to the AV/subcode digital stream signal and control signal.

In addition, an audio video edition system according to Claim 30 of the present invention is characterized in that the bus interface means is adapted to connect to one end of a stream bus different from the stream bus between the memory disc device set forth in Claim 26 and the digital VCR, and to use a specified method to also input from and output to the different stream bus, data corresponding to an AV/subcode digital stream signal and a control signal, and in that in editing sounds and videos input to the memory disc device, the memory disc device is controlled and operated for edition by a personal computer having an interface connected to the other end of the different stream bus so as to use the specified method to input from and output to the different stream bus, the data corresponding to the AV/subcode digital stream signal and control signal.

According to such an apparatus, in using the memory disc to edit sounds and videos from the digital VCR, the memory disc in the memory disc device can be directly interfaced with the stream bus standardized for sounds and videos to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status. In addition, after the edition of the AV/subcode digital stream signal, the memory disc device can use the interface control means to reproduce the AV/subcode digital stream signal recorded on the memory disc and to transmit it to the digital VCR through the disc and bus interface means and the stream bus. The audio digital stream signals in the AV/subcode digital stream signal can be monitored, while replacing, with timings controlled by the interface control means, some of the audio digital stream signals recorded on the memory disc with audio digital stream signals converted by the A/D converter, the encoder, and the recording means based on analog audio signals from the analog audio input means.

In addition, an audio video edition system according to Claim 31 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding as audio and video digital stream signals to AV/subcode digital stream signals comprising DVC-compressed audio and video digital stream signals output from the digital VCR and subcode digital stream signals including time codes, the data also corresponding to control signals comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signals and control signals, a disc interface means capable of recording and reproducing all data corresponding to the AV/subcode digital stream signals and control signals from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signals based on the audio and video analog signals from the input means, an analog video signal generation means controlled by the interface control means to generate audio and video analog signals using the AV/subcode digital stream signals from the memory disc, an output means for outputting the audio and video analog signals from the analog video signal generation means, an analog audio input means for inputting only analog audio signals that are audio information in an analog signal form, an A/D converter for converting the analog audio signals from the analog audio input means into digital audio signals, an encoder for DV-compressing the digital audio signals from the A/D converter into PCM audio signals, and a recording means for recording the PCM audio signals from the encoder on the memory disc through the disc interface means, whereby the interface control means controls and operates the digital VCR and the memory disc device to record all or part of an AV/subcode digital stream signal from the digital VCR on the memory disc through the stream bus and the bus and disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; the audio and video analog signals based on the edited AV/subcode digital stream signal can be recorded on an analog VCR connected through the output terminal, while the edited AV/subcode digital stream signal can be recorded on the digital VCR through the bus interface means and the stream bus; in re-editing only the audio digital stream signals in the AV/subcode digital stream signal recorded on the memory disc after the edition of the AV/subcode digital stream signal, the memory disc device uses the A/D converter, the encoder, and the recording means to convert analog audio signals input from the analog audio input means into the PCM audio signals, which are recorded on the memory disc through the disc interface means as audio digital stream signals; and the interface control means reproduces the AV/subcode digital stream signal recorded on the memory disc and transmits it through the disc and bus interface means and the stream bus to the digital VCR, the audio digital stream signals in the AV/subcode digital stream signal being monitored, while replacing, with timings controlled by the interface control means, some of the audio digital stream signals in the AV/subcode digital stream signal recorded on the memory disc with audio digital stream signals converted by the A/D converter, the encoder, and the recording means based on analog audio signals from the analog audio input means.

In addition, an audio video edition system according to Claim 32 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding to an AV/subcode digital stream signal as audio and video digital stream signals comprising DVC-compressed audio and video digital stream signals output from the digital VCR and subcode digital stream signals including time codes, the data also corresponding to a control signal comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signal and control signal, a disc interface means capable of recording and reproducing all data corresponding to the AV/subcode digital stream signal and control signal from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signal based on the audio and video analog signals from the input means, an analog video signal generation means controlled by the interface control means to generate audio and video analog signals using the AV/subcode digital stream signal from the memory disc, an output means for outputting the audio and video analog signals from the analog video signal generation means, an analog audio input means for inputting only analog audio signals that are audio information in an analog signal form, an A/D converter for converting the analog audio signals from the analog audio input means into digital audio signals, an encoder for DV-compressing the digital audio signals from the A/D converter into PCM audio signals, and a recording means for recording the PCM audio signals from the encoder on the memory disc through the disc interface means, whereby the interface control means controls and operates the digital VCR and the memory disc device to record all or part of an AV/subcode digital stream signal from the digital VCR on the memory disc through the stream bus and the bus and disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; the audio and video analog signals based on the edited AV/subcode digital stream signal can be recorded on an analog VCR connected through the output terminal, while the edited AV/subcode digital stream signal can be recorded on the digital VCR through the bus interface means and the stream bus; and in re-editing only the audio digital stream signals in the AV/subcode digital stream signal recorded on the memory disc after the edition of the AV/subcode digital stream signal, the interface control means reproduces the AV/subcode digital stream signal recorded on the memory disc and transmits it through the disc and bus interface means and the stream bus to the digital VCR, the audio digital stream signals in the AV/subcode digital stream signal being monitored, while replacing, with timings controlled by the interface control means, some of the audio digital stream signals in the AV/subcode digital stream signal recorded on the memory disc with audio digital stream signals converted by the A/D converter, the encoder, and the recording means based on analog audio signals from the analog audio input means.

In addition, an audio video edition system according to Claim 33 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding as audio and video digital stream signals to AV/subcode digital stream signals comprising DVC-compressed audio and video digital stream signals output from the digital VCR and subcode digital stream signals including time codes, the data also corresponding to control signals comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signals and control signals, a disc interface means capable of recording and reproducing all data corresponding to the AV/subcode digital stream signals and control signals from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signals based on the audio and video analog signals from the input means, an analog video signal generation means controlled by the interface control means to generate audio and video analog signals using the AV/subcode digital stream signals from the memory disc, an output means for outputting the audio and video analog signals from the analog video signal generation means, an analog audio input means for inputting only analog audio signals that are audio information in an analog signal form, an A/D converter for converting the analog audio signals from the analog audio input means into digital audio signals, an encoder for DV-compressing the digital audio signals from the A/D converter into PCM audio signals, and a recording means for recording the PCM audio signals from the encoder on the memory disc through the disc interface means, whereby the interface control means controls and operates the digital VCR and the memory disc device to record an AV/subcode digital stream signal from the AV/subcode digital stream signal generation means on the memory disc through the disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; the audio and video analog signals based on the edited AV/subcode digital stream signal can be recorded on an analog VCR connected through the output terminal, while the edited AV/subcode digital stream signal can be recorded on the digital VCR through the bus interface means and the stream bus; in re-editing only the audio digital stream signals in the AV/subcode digital stream signal recorded on the memory disc after the edition of the AV/subcode digital stream signal, the memory disc device uses the A/D converter, the encoder, and the recording means to convert analog audio signals input from the analog audio input means into the PCM audio signals, which are recorded on the memory disc through the disc interface means as audio digital stream signals; and the interface control means reproduces the AV/subcode digital stream signal recorded on the memory disc and transmits it through the disc and bus interface means and the stream bus to the digital VCR, the audio digital stream signals in the AV/subcode digital stream signal being monitored, while replacing, with timings controlled by the interface control means, some of the audio digital stream signals in the AV/subcode digital stream signal recorded on the memory disc with audio digital stream signals converted by the A/D converter, the encoder, and the recording means based on analog audio signals from the analog audio input means.

In addition, an audio video edition system according to Claim 34 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding to an AV/subcode digital stream signal as audio and video digital stream signals comprising DVC-compressed audio and video digital stream signals output from the digital VCR and subcode digital stream signals including time codes, the data also corresponding to a control signal comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signal and control signal, a disc interface means capable of recording and reproducing all data corresponding to the AV/subcode digital stream signal and control signal from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signal based on the audio and video analog signals from the input means, an analog video signal generation means controlled by the interface control means to generate audio and video analog signals using the AV/subcode digital stream signal from the memory disc, an output means for outputting the audio and video analog signals from the analog video signal generation means, an analog audio input means for inputting only analog audio signals that are audio information in an analog signal form, an A/D converter for converting the analog audio signals from the analog audio input means into digital audio signals, an encoder for DV-compressing the digital audio signals from the A/D converter into PCM audio signals, and a recording means for recording the PCM audio signals from the encoder on the memory disc through the disc interface means, whereby the interface control means controls and operates the digital VCR and the memory disc device to record an AV/subcode digital stream signal from the AV/subcode digital stream signal generation means on the memory disc through the disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; the audio and video analog signals based on the edited AV/subcode digital stream signal can be recorded on an analog VCR connected through the output terminal, while the edited AV/subcode digital stream signal can be recorded on the digital VCR through the bus interface means and the stream bus; and in re-editing only the audio digital stream signals in the AV/subcode digital stream signal recorded on the memory disc after the edition of the AV/subcode digital stream signal, the interface control means reproduces the AV/subcode digital stream signal recorded on the memory disc and transmits it through the disc and bus interface means and the stream bus to the digital VCR, the audio digital stream signals in the AV/subcode digital stream signal being monitored, while replacing, with timings controlled by the interface control means, some of the audio digital stream signals in the AV/subcode digital stream signal recorded on the memory disc with audio digital stream signals converted by the A/D converter, the encoder, and the recording means based on analog audio signals from the analog audio input means.

In addition, an audio video edition system according to Claim 35 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding as audio and video digital stream signals to AV/subcode digital stream signals comprising DVC-compressed audio and video digital stream signals output from the digital VCR and subcode digital stream signals including time codes, the data also corresponding to control signals comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signals and control signals, a disc interface means capable of recording and reproducing all data corresponding to the AV/subcode digital stream signals and control signals from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signals based on the audio and video analog signals from the input means, an analog video signal generation means controlled by the interface control means to generate audio and video analog signals using the AV/subcode digital stream signals from the memory disc, an output means for outputting the audio and video analog signals from the analog video signal generation means, an analog audio input means for inputting only analog audio signals that are audio information in an analog signal form, an A/D converter for converting the analog audio signals from the analog audio input means into digital audio signals, an encoder for DV-compressing the digital audio signals from the A/D converter into PCM audio signals, and a recording means for recording the PCM audio signals from the encoder on the memory disc through the disc interface means, whereby the interface control means controls and operates the digital VCR and the memory disc device to record all or part of an AV/subcode digital stream signal from the digital VCR on the memory disc through the stream bus and the bus and disc interface means and records an AV/subcode digital stream signal into which analog signals from the input means are converted, on the memory disc through the disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; the audio and video analog signals based on the edited AV/subcode digital stream signal can be recorded on an analog VCR connected through the output terminal, while the edited AV/subcode digital stream signal can be recorded on the digital VCR through the bus interface means and the stream bus; in re-editing only the audio digital stream signals in the AV/subcode digital stream signal recorded on the memory disc after the edition of the AV/subcode digital stream signal, the memory disc device uses the A/D converter, the encoder, and the recording means to convert analog audio signals input from the analog audio input means into the PCM audio signals, which are recorded on the memory disc through the disc interface means as audio digital stream signals; and the interface control means reproduces the AV/subcode digital stream signal recorded on the memory disc and transmits it through the disc and bus interface means and the stream bus to the digital VCR, the audio digital stream signals in the AV/subcode digital stream signal being monitored, while replacing, with timings controlled by the interface control means, some of the audio digital stream signals in the AV/subcode digital stream signal recorded on the memory disc with audio digital stream signals converted by the A/D converter, the encoder, and the recording means based on analog audio signals from the analog audio input means.

In addition, an audio video edition system according to Claim 36 of the present invention is an audio video edition system comprising a digital VCR for digitally recording and reproducing sounds and videos on and from a recording medium, and a memory disc device having a memory disc that is a recording medium different from the above recording medium, the digital VCR and the memory disc device being connected via a single stream bus standardized as a bus for audio and video digital stream signals, the memory disc being used to digitally edit sounds and videos input to the memory disc device from the digital VCR through the stream bus, wherein the digital VCR comprises a bus interface capable of using a specified method to input from and output to the stream bus all data corresponding to an AV/subcode digital stream signal as audio and video digital stream signals comprising DVC-compressed audio and video digital stream signals output from the digital VCR and subcode digital stream signals including time codes, the data also corresponding to a control signal comprising digital VCR controlling commands and status signals for the digital VCR, the digital VCR further comprising a bus interface circuit used by the bus interface to input and output the data; and the memory disc device is directly connected to the stream bus and comprises a bus interface means capable of using the specified method to input from and output to the stream bus all data corresponding to the AV/subcode digital stream signal and control signal, a disc interface means capable of recording and reproducing all data corresponding to the AV/subcode digital stream signal and control signal from the bus interface means, on and from the memory disc in the units of video signal frames, an interface control means for operating and controlling the bus and disc interface means using the control signals, an input means for inputting external analog signals for sounds and videos, an AV/subcode digital stream signal generation means controlled by the interface control means to generate the AV/subcode digital stream signal based on the audio and video analog signals from the input means, an analog video signal generation means controlled by the interface control means to generate audio and video analog signals using the AV/subcode digital stream signal from the memory disc, an output means for outputting the audio and video analog signals from the analog video signal generation means, an analog audio input means for inputting only analog audio signals that are audio information in an analog signal form, an A/D converter for converting the analog audio signals from the analog audio input means into digital audio signals, an encoder for DV-compressing the digital audio signals from the A/D converter into PCM audio signals, and a recording means for recording the PCM audio signals from the encoder on the memory disc through the disc interface means, whereby the interface control means controls and operates the digital VCR and the memory disc device to record all or part of an AV/subcode digital stream signal from the digital VCR on the memory disc through the stream bus and the bus and disc interface means and records an AV/subcode digital stream signal into which analog signals from the input means are converted, on the memory disc through the disc interface means; the memory disc is subsequently reproduced to convert the AV/subcode digital stream signal obtained into analog video signals through the disc interface means and the analog video signal generation means, the signals being then applied to a monitor TV from the output means; while images reproduced on the monitor TV are being monitored, programs for cut-in and cut-out points that are an edition start and end points, respectively, are determined, with the interface control means carrying out edition while reproducing the AV/subcode digital stream signal from the memory disc according to the programs; the audio and video analog signals based on the edited AV/subcode digital stream signal can be recorded on an analog VCR connected through the output terminal, while the edited AV/subcode digital stream signal can be recorded on the digital VCR through the bus interface means and the stream bus; and in re-editing only the audio digital stream signals in the AV/subcode digital stream signal recorded on the memory disc after the edition of the AV/subcode digital stream signal, the interface control means reproduces the AV/subcode digital stream signal recorded on the memory disc and transmits it through the disc and bus interface means and the stream bus to the digital VCR, the audio digital stream signals in the AV/subcode digital stream signal being monitored, while replacing, with timings controlled by the interface control means, some of the audio digital stream signals in the AV/subcode digital stream signal recorded on the memory disc with audio digital stream signals converted by the A/D converter, the encoder, and the recording means based on analog audio signals from the analog audio input means.

In addition, an audio video edition system according to Claim 37 of the present invention is characterized in that the memory disc device set forth in Claim 31, 32, 33, 34, 35, or 36 comprises a time code detection means controlled by the interface control means to detect and obtain from a subcode digital stream signal, time codes corresponding to the edition cut-in and cut-out points, a time code memory means for storing the time codes from the time code detection means, and a display for displaying the contents of the time code memory means, and further comprises a display control means for controlling the display to display the time codes so as to correspond to the number of programs comprising the cut-in and cut-out points, all these means being used to edit sounds and videos input to the memory disc device, and in that edition is carried out while monitoring relevant images reproduced on the monitor TV and an edition list displayed on the display so as to correspond to edition programs for the images.

In addition, an audio video edition system according to Claim 38 of the present invention is characterized in that the memory disc device set forth in Claim 37 comprises a character video generation means for generating character video signals by converting the edition cut-in and cut-out points based on the time codes in the time code memory means as well as character information for each program number into character displaying video signals, a superimpose means for generating analog image signals by superimposing the character video signals from the character video generation means on the analog video signals from the analog video signal generation means, a first output means for outputting the analog video signals from the superimpose means, and a second output means for outputting the analog video signals from the analog video signal generation means, all these means being used to edit sounds and videos input to the memory disc device, and in that the analog video signals from the first output means are applied to the monitor TV so that edition is carried out while monitoring relevant reproduced images and an edition list corresponding to edition programs.

In addition, an audio video edition system according to Claim 39 of the present invention is characterized in that the memory disc device set forth in Claim 38 comprises a small-screen creation means controlled by the display control means to create still-image small-screen signals by decimating analog video signals from the analog video signal generation means in such a way as to correspond to the edition cut-in and cut-out points and each program number, a small-screen creation memory means for temporarily storing the still-image small-screen signals from the small-screen creation means, a mix means controlled by the display control means to output to the first output means video signals for picture-in-picture screens created by mixing the still-image small-screen signals from the small-screen creation means with the analog video signals from the analog video signal generation means, all these means being used to edit sounds and videos input to the memory disc device, and in that the video signals for picture-in-picture screens from the mix means are applied to the monitor TV through the first output means so that edition is carried out while monitoring relevant images reproduced on the monitor TV and small edition screens corresponding to edition programs.

In addition, an audio video edition system according to Claim 40 of the present invention is characterized in that the memory disc device set forth in claim 31, 32, 33, 34, 35, 36, 38, or 39 comprise a light receiving means for receiving emissions for operations and commands from an external remote controller as signals for operations and control executed by the interface control means so that in editing sounds and videos input to the memory disc device, the interface control means is remote-controlled by the remote controller through the display control means based on the light signals received by the light receiving means and corresponding to operations and commands, so as to execute operations and control based on the operations and commands from the remote controller.

In addition, an audio video edition system according to Claim 41 of the present invention is characterized in that the memory disc device set forth in Claim 37 comprises a light receiving means for receiving emissions for operations and commands from an external remote controller as signals for operations and control executed by the interface control means so that in editing sounds and videos input to the memory disc device, the interface control means is remote-controlled by the remote controller through the display control means based on the light signals received by the light receiving means and corresponding to operations and commands, so as to execute operations and control based on the operations and commands from the remote controller.

In addition, an audio video edition system according to Claim 42 of the present invention is characterized in that in editing sounds and videos input to the memory disc device, the bus interface means is adapted to connect to one end of a stream bus different from the stream bus between the memory disc device set forth in Claim 31, 32, 33, 34, 35, 36, 38, 39, or 41 and the digital VCR and to use a specified method to also input from and output to the different stream bus, data corresponding to an AV/subcode digital stream signal and a control signal and in that in editing sounds and videos input to the memory disc device the memory disc device is controlled and operated for edition by a personal computer having an interface connected to the other end of the different stream bus so as to use the specified method to input from and output to the different stream bus, the data corresponding to the AV/subcode digital stream signal and control signal.

In addition, an audio video edition system according to Claim 43 of the present invention is characterized in that in editing sounds and videos input to the memory disc device, the bus interface means is adapted to connect to one end of a stream bus different from the stream bus between the memory disc device set forth in Claim 37 and the digital VCR and to use a specified method to also input from and output to the different stream bus, data corresponding to an AV/subcode digital stream signal and a control signal, and in that in editing sounds and videos input to the memory disc device in editing sounds and videos input to the memory disc device, the memory disc device is controlled and operated for edition by a personal computer having an interface connected to the other end of the different stream bus so as to use the specified method to input from and output to the different stream bus, the data corresponding to the AV/subcode digital stream signal and control signal.

In addition, an audio video edition system according to Claim 44 of the present invention is characterized in that in editing sounds and videos input to the memory disc device, the bus interface means is adapted to connect to one end of a stream bus different from the stream bus between the memory disc device set forth in Claim 40 and the digital VCR, and to use a specified method to also input from and output to the different stream bus, data corresponding to an AV/subcode digital stream signal and a control signal, and in that in editing sounds and videos input to the memory disc device the memory disc device is controlled and operated for edition by a personal computer having an interface connected to the other end of the different stream bus so as to use the specified method to input from and output to the different stream bus, the data corresponding to the AV/subcode digital stream signal and control signal.

According to such an apparatus, in using the memory disc to edit sounds and videos from the digital or analog VCR that is an information source, the memory disc in the memory disc device can be directly interfaced with the stream bus standardized for sounds and videos to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status. In addition, under the control of the interface control means, the AV/subcode digital stream signal generation means can also generate and record an AV/subcode digital stream signal and a control signal on the memory disc based on audio and video analog signals input through the external input means. Conversely, under the control of the interface control means, the analog video signal generation means can generate and output audio and video analog signals from the output means using an AV/subcode digital stream signal reproduced from the memory disc. The analog video signals can be applied to the monitor TV or another analog VCR so that edition is carried out while monitoring relevant images reproduced on the monitor TV and so that the analog VCR connected to the input and output means can also execute recording and reproduction through these means. In addition, after the edition of the AV/subcode digital stream signal, the memory disc device can use the interface control means to reproduce the AV/subcode digital stream signal recorded on the memory disc and to transmit it to the digital VCR through the disc and bus interface means and the stream bus. The audio digital stream signals in the AV/subcode digital stream signal can be monitored, while replacing, with timings controlled by the interface control means, some of the audio digital stream signals recorded on the memory disc with audio digital stream signals converted by the A/D converter, the encoder, and the recording means based on analog audio signals from the analog audio input means.

In addition, an audio video edition system according to Claim 45 is characterized in that the IEEE 1394 bus, which is specified by IEEE, is used as the stream bus set forth in Claim 1, 2, 3, 4, 5, 8, 9, 10, 11, 13, 14, 16, 18, 19, 20, 21, 23, 24, 25, 27, 29, 30, 31, 32, 33, 34, 35, 36, 38, 39, 41, 43, or 44.

In addition, an audio video edition system according to Claim 46 is characterized in that the IEEE 1394 bus, which is specified by IEEE, is used as the stream bus set forth in Claim 6.

In addition, an audio video edition system according to Claim 47 is characterized in that the IEEE 1394 bus, which is specified by IEEE, is used as the stream bus set forth in Claim 7.

In addition, an audio video edition system according to Claim 48 is characterized in that the IEEE 1394 bus, which is specified by IEEE, is used as the stream bus set forth in Claim 12.

In addition, an audio video edition system according to Claim 49 is characterized in that the IEEE 1394 bus, which is specified by IEEE, is used as the stream bus set forth in claim 15.

In addition, an audio video edition system according to Claim 50 is characterized in that the IEEE 1394 bus, which is specified by IEEE, is used as the stream bus set forth in Claim 17.

In addition, an audio video edition system according to Claim 51 is characterized in that the IEEE 1394 bus, which is specified by IEEE, is used as the stream bus set forth in Claim 22.

In addition, an audio video edition system according to Claim 52 is characterized in that the IEEE 1394 bus, which is specified by IEEE, is used as the stream bus set forth in Claim 26.

In addition, an audio video edition system according to Claim 53 is characterized in that the IEEE 1394 bus, which is specified by IEEE, is used as the stream bus set forth in Claim 28.

In addition, an audio video edition system according to Claim 54 is characterized in that the IEEE 1394 bus, which is specified by IEEE, is used as the stream bus set forth in Claim 37.

In addition, an audio video edition system according to Claim 55 is characterized in that the IEEE 1394 bus, which is specified by IEEE, is used as the stream bus set forth in Claim 40.

In addition, an audio video edition system according to Claim 56 is characterized in that the IEEE 1394 bus, which is specified by IEEE, is used as the stream bus set forth in Claim 42.

According to such an apparatus, in using the memory disc to edit sounds and videos from the digital VCR, the memory disc in the memory disc device can be directly interfaced with the audio and video stream bus standardized for sounds and videos such as IEEE 1394 bus to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status.

According to the preferred embodiments 1 to 4 of the present invention, in using the memory disc to edit sounds and videos from the digital VCR, the memory disc in the memory disc device can be directly interfaced with the audio and video digital stream bus standardized for sounds and videos such as IEEE 1394 bus to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status.

Thus, sounds and videos from the digital VCR can be edited more inexpensively and more efficiently than in the prior art, and the speed, accuracy, and functionality of the edition can be increased.

According to the preferred embodiments 5 to 7 of the present invention, in using the memory disc to edit sounds and videos from the digital or analog VCR that is an information source, the memory disc in the memory disc device can be directly interfaced with the audio and video stream bus standardized for sounds and videos such as IEEE 1394 bus to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status.

In addition, under the control of the interface control means, the AV/subcode digital stream signal generation means can also generate and record an AV/subcode digital stream signal and a control signal on the memory disc based on audio and video analog signals input through the external input means. Conversely, under the control of the interface control means, the analog video signal generation means can generate and output audio and video analog signals from the output means using an AV/subcode digital stream signal reproduced from the memory disc. The analog video signals can be applied to the monitor TV or another analog VCR so that edition is carried out while monitoring relevant images reproduced on the monitor TV and so that the analog VCR connected to the input and output means can also execute recording and reproduction through these means as in the digital VCR.

Thus, sounds and videos from the digital VCR can be edited more inexpensively and more efficiently than in the prior art, and the speed, accuracy, and functionality of the edition can be increased.

In addition, between the digital VCR connected to the memory disc device and the analog VCR, which is most commonly used in the markets, sounds and videos can be edited based on audio and video digital stream signals transmitted to the memory disc device from the digital VCR through the IEEE 1394 bus, and the edited sounds and videos can be recorded on the analog VCR as analog signals. Conversely, sounds and videos edited based on audio and video analog signals from the analog VCR can be recorded on the digital VCR as digital signals.

Furthermore, by recording on the memory disc, audio and video digital stream signals from the digital VCR beforehand, the digital VCR can be disconnected and edition can be carried out, for example, in another place based on the audio and video digital stream signals in the memory disc, using only an edition device principally composed of a memory disc device as well as a monitor TV, both of which are connected to the digital VCR. The edited sounds and videos can be recorded on the digital VCR connected to the edition device or on an analog VCR separate from the digital VCR, as required.

In addition, according to the preferred embodiment 8 of the present invention, in using the memory disc to edit sounds and videos from the digital VCR, the memory disc in the memory disc device can be directly interfaced with the audio and video digital stream bus standardized for sounds and videos such as IEEE 1394 bus to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status.

Thus, sounds and videos from the digital VCR can be edited more inexpensively and more efficiently than in the prior art, and the speed, accuracy, and functionality of the edition can be increased.

In addition, after the edition of the AV/subcode digital stream signal, the memory disc device can use the interface control means to reproduce the AV/subcode digital stream signal recorded on the memory disc and to transmit it to the digital VCR through the disc and bus interface means and the IEEE 1394 bus. The audio digital stream signals in the AV/subcode digital stream signal can be monitored, while replacing, with timings controlled by the interface control means, some of the audio digital stream signals recorded on the memory disc with audio digital stream signals converted by the A/D converter, the encoder, and the recording means based on analog audio signals from the analog audio input means.

Consequently, after the edition of the AV/subcode digital stream signal, only the audio digital stream signals in the AV/subcode digital stream signal recorded on the memory disc can be re-edited using an after recording function.

According to the preferred embodiment 9 of the present invention, in using the memory disc to edit sounds and videos from the digital or analog VCR that is an information source, the memory disc in the memory disc device can be directly interfaced with the audio and video digital stream bus standardized according to IEEE 1394 to set a recording region on the memory disc for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status.

In addition, under the control of the interface control means, the AV/subcode digital stream signal generation means can also generate and record an AV/subcode digital stream signal and a control signal on the memory disc based on audio and video analog signals input through the external input means. Conversely, under the control of the interface control means, the analog video signal generation means can generate and output audio and video analog signals from the output means using an AV/subcode digital stream signal reproduced from the memory disc. The analog video signals can be applied to the monitor TV or another analog VCR so that edition is carried out while monitoring relevant images reproduced on the monitor TV and so that the analog VCR connected to the input and output means can also execute recording and reproduction through these means, similarly as in the digital VCR.

Thus, sounds and videos from the digital VCR can be edited more inexpensively and more efficiently than in the prior art, and the speed, accuracy, and functionality of the edition can be increased.

In addition, between the digital VCR connected to the memory disc device and the analog VCR, which is most commonly used in the markets, sounds and videos can be edited based on audio and video digital stream signals transmitted to the memory disc device from the digital VCR through the IEEE 1394 bus, and the edited sounds and videos can be recorded on the analog VCR as analog signals. Conversely, sounds and videos edited based on audio and video analog signals from the analog VCR can be recorded on the digital VCR as digital signals.

Furthermore, by recording on the memory disc, audio and video digital stream signals from the digital VCR beforehand, the digital VCR can be disconnected and edition can be carried out, for example, in another place based on the audio and video digital stream signals in the memory disc, using only an edition device principally composed of a memory disc device as well as a monitor TV, both of which are connected to the digital VCR. The edited sounds and videos can be recorded on the digital VCR connected to the edition device or on an analog VCR separate from the digital VCR, as required.

In addition, after the edition of the AV/subcode digital stream signal, the memory disc device can use the interface control means to reproduce the AV/subcode digital stream signal recorded on the memory disc and to transmit it to the digital VCR through the disc and bus interface means and the IEEE 1394 bus. The audio digital stream signals in the AV/subcode digital stream signal can be monitored, while replacing, with timings controlled by the interface control means, some of the audio digital stream signals recorded on the memory disc with audio digital stream signals converted by the A/D converter, the encoder, and the recording means based on analog audio signals from the analog audio input means.

Consequently, after the edition of the AV/subcode digital stream signal, only the audio digital stream signals in the AV/subcode digital stream signal recorded on the memory disc can be re-edited using an after recording function.

### Brief Description of the Drawings

FIG. 1 is a block diagram of a configuration of an audio video edition system showing Embodiment 1 of the present invention;
FIG. 2 is a block diagram of a configuration of an audio video edition system showing Embodiment 2 of the present invention;
FIG. 3 is a block diagram of a configuration of an audio video edition system showing Embodiment 3 of the present invention;
FIG. 4 is a block diagram of a configuration of an audio video edition system showing Embodiment 4 of the present invention;
FIG. 5 is a block diagram of a configuration of an audio video edition system showing Embodiment 5 of the present invention;
FIG. 6 is a block diagram of a configuration of an audio video edition system showing Embodiment 6 of the present invention;
FIG. 7 is a block diagram of a configuration of an audio video edition system showing Embodiment 7 of the present invention;
FIG. 8 is a block diagram of a configuration of an audio video edition system showing Embodiment 8 of the present invention;
FIG. 9 is a block diagram of another configuration of the audio video edition system showing Embodiment 8;
FIG. 10 is a block diagram of yet another configuration of the audio video edition system showing Embodiment 8;
FIG. 11 is a block diagram of still another configuration of the audio video edition system showing Embodiment 8;
FIG. 12 is a block diagram of a configuration of an audio video edition system showing Embodiment 9 of the present invention;
FIG. 13 is a block diagram of another configuration of the audio video edition system showing Embodiment 9;
FIG. 14 is a block diagram of yet another configuration of the audio video edition system showing Embodiment 9; and
FIG. 15 is a block diagram of a configuration of a conventional audio video edition system.

### Description of Preferred Embodiments

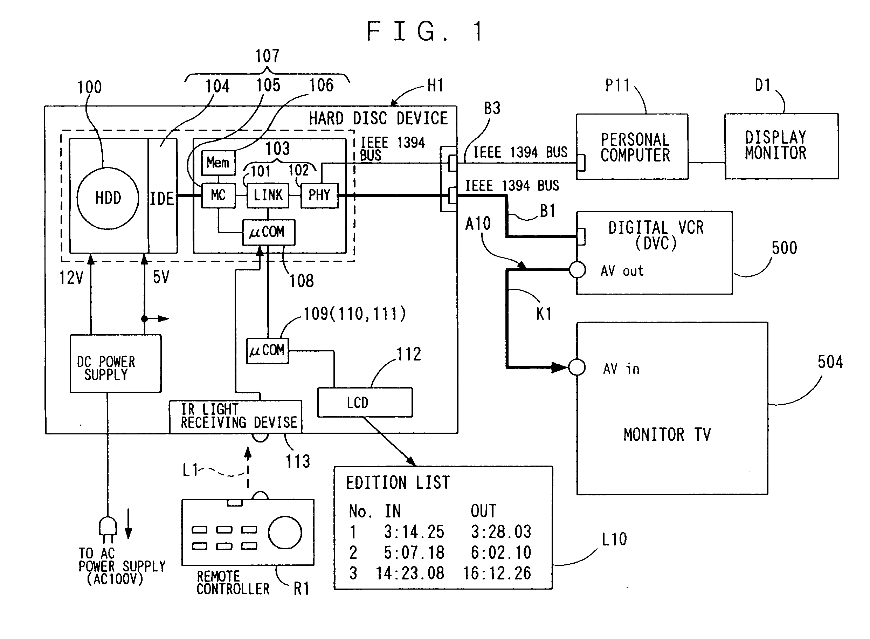

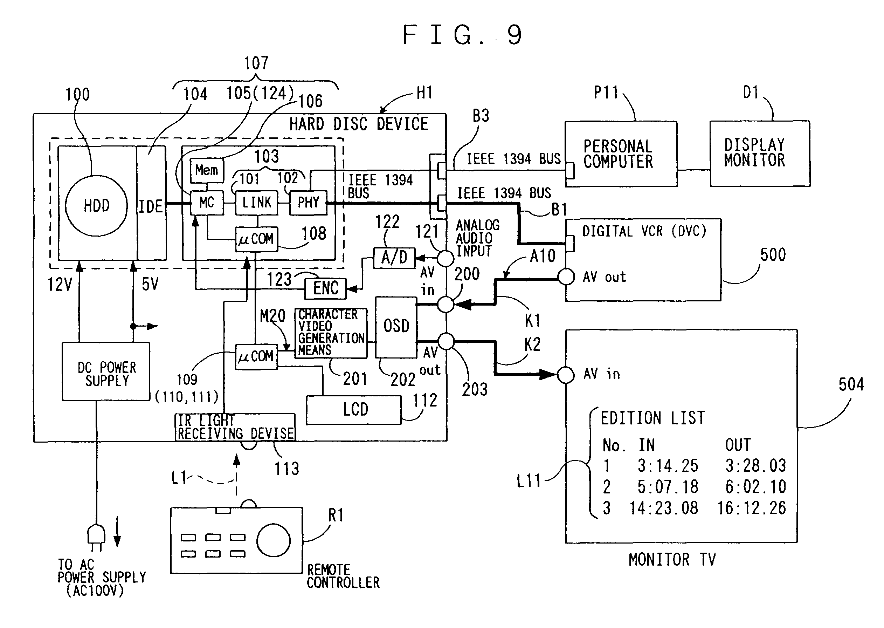

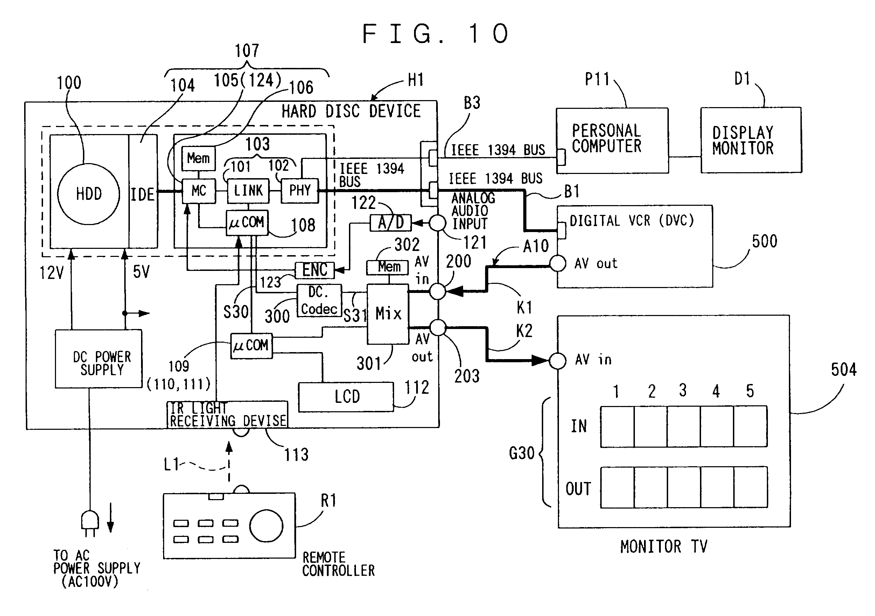

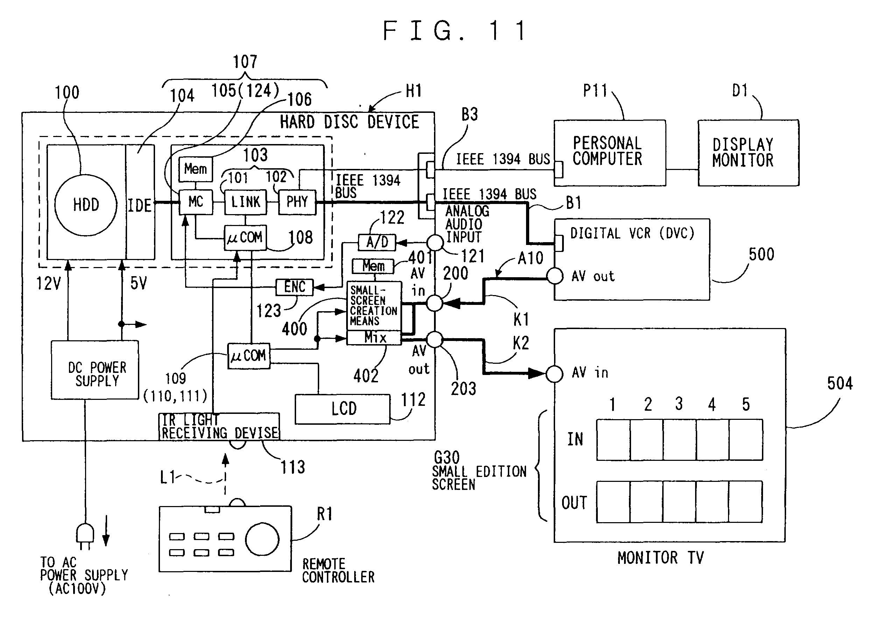

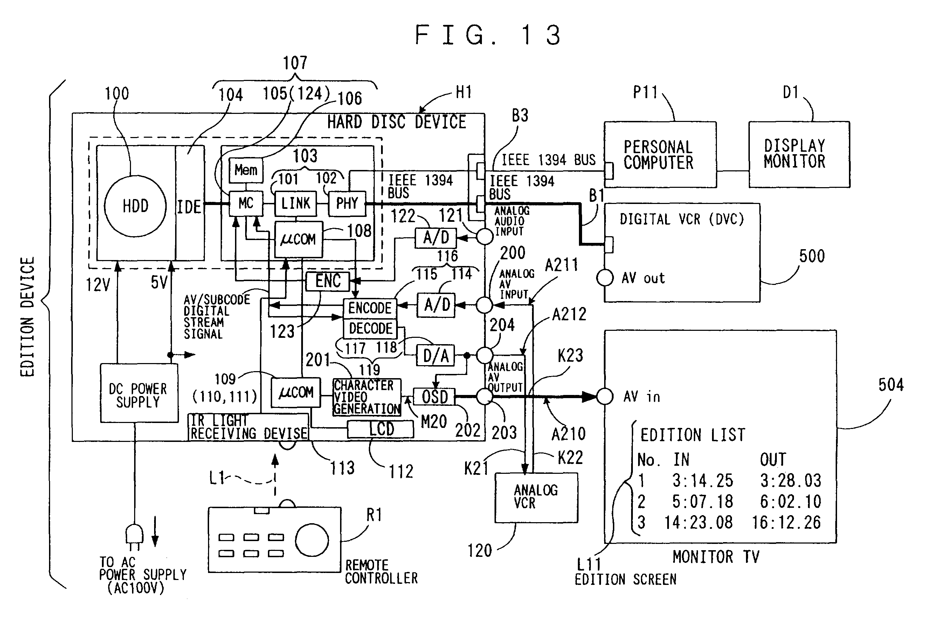

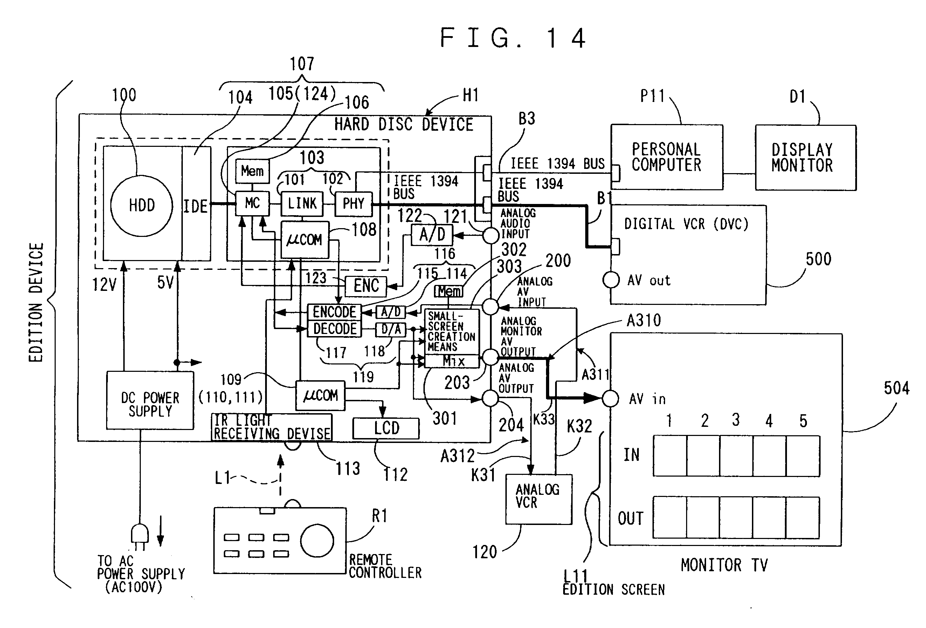

The preferred embodiments 1 to 9 of the present invention are shown in FIGS. 1 to 14.

An audio video edition system according to Embodiment 1 of the present invention is described. Those components of this embodiment that provide effects similar to those of the conventional audio video edition system shown in FIG. 15 have the same reference numerals, and their detailed description is omitted.

FIG. 1 is a block diagram of a configuration of an audio video edition system showing Embodiment 1 of the present invention. In a basic configuration, this audio video edition system comprises a digital VCR 500 for digitally recording and reproducing sounds and videos on and from a magnetic-tape-shaped digital video cassette (DVC) used as a recording medium, and a hard disc device H1 having a hard disc (HDD) 100 that assumes a medium form different from that of the recording medium of the digital VCR 500 and that is one of the disc-shaped memory discs. The digital VCR 500 and the hard disc device H1 are connected via a single IEEE 1394 bus B1 standardized according to IEEE as a stream bus for audio and video digital stream signals so that sounds and videos input to the hard disc device H1 from the digital VCR 500 through the IEEE 1394 bus B1 are digitally edited using the hard disc 100.

In FIG. 1, the digital VCR 500 comprises a bus interface (a DV terminal) that can use a specified method to input from and output to the IEEE 1394 bus B1 all data corresponding to an AV/subcode digital stream signal as audio and video digital stream signals comprising DVC-compressed audio digital stream signals output from the digital VCR 500 and subcode digital stream signals including time codes, the data also corresponding to control signals comprising commands controlling the digital VCR 500 and status signals for the digital VCR 500. The digital VCR further comprises a bus interface circuit (not shown) for allowing the bus interface to input and output the above data.

On the other hand, the hard disc device H1 is directly connected to the IEEE 1394 bus B1 to input from and output to the IEEE 1394 bus B1 all the data corresponding to the AV/subcode digital stream signal and control signal, using a specified method similar to that described above. The hard disc device H1 comprises a bus interface means 103 comprising a LINK 101 that is a higher-protocol data link layer for audio and video digital stream signals and a PHY 102 that is a lower-protocol physical layer, a memory controller (MC) 105 for enabling all the data corresponding to the AV/subcode digital stream signal and control signal from the bus interface means 103 to be recorded on and reproduced from the hard disc 100 in the units of video signal frames that mediate between the hard disc 100 and a disc interface, which is described below, a disc interface means 107 comprising a memory controller 105 used for recording on and reproduction from the hard disc 100 and an interface (IDE) 104 for transmitting and receiving signals to and from the hard disc 100, and an interface control means 108 comprising a microcomputer (µCOM) for operating and controlling the bus interface means 103 and the disc interface means 107 based on the control signal.

In addition, the hard disc device H1 comprises in a microcomputer (µCOM) 109 controlled by the interface control means 108, a time code detection means 110 for detecting and obtaining from a subcode digital stream signal, time codes corresponding to edition cut-in and cut-out points, and a time code memory means 111 for storing the time codes from the time code detection means 110, and a display (LCD) 112 for displaying the contents of the time code memory means 111 is connected to the microcomputer 109. The hard disc device H1 further comprises a microcomputer 109 acting as a display control means 109 for controlling the display 112 to display the time codes so as to correspond to the number of programs comprising the cut-in and cut-out points.

In addition, the hard disc device H1 further comprises an IR light receiving device 113 for receiving emissions (for example, infrared rays) L1 for operations and commands from a remote controller R1 externally operated using keys, as signals for operations and control executed by the interface control means 108.

An operation of the audio video edition system configured in the above manner is described below.

First, the interface control means 108 controls and operates the digital VCR 500 and the hard disc device H1 to record all or part of an AV/subcode digital stream signal from the digital VCR 500 on the hard disc 100 through the IEEE 1394 bus B1, the bus interface means 103, and the disc interface means 107.

Subsequently, the interface control means 108 reproduces the hard disc 100 through the disc interface means 107, and transmits the AV/subcode digital stream signal obtained to the digital VCR 500 through the disc interface means 107, the bus interface means 103, and the IEEE 1394 bus B1. A VCR codec (not shown) provided in the digital VCR 500 and having a decoder decodes and converts the AV/subcode digital stream signal into analog video signals A10, which are then applied to a monitor TV 504 through a connection cable K1.

Next, while monitoring the resulting reproduced images, programs for the cut-in and cut-out points corresponding to an edition start and end points, respectively, are determined. The interface control means 108 reproduces and edits the AV/subcode digital stream signal from the hard disc 100 according to the programs, and in this case, an edition list L10 corresponding to the edition programs is displayed on the display 112 so that edition is carried out while monitoring the reproduced images on the monitor TV 504 and the edition list L10 on the display 112.

In addition, by using the external remote controller R1 to remote-control the interface control means 108 through the display control means 109 based on light signals received by the IR light receiving device 113 and corresponding to operations and commands, the interface control means 108 executes the operations and control based on operations and commands from the remote controller R1.

The bus interface means 103 in the hard disc device H1 is connected not only to the IEEE 1394 bus B1 between the hard disc device H1 and the digital VCR 500 but also to one end of an IEEE 1394 bus B3 provided between the hard disc device H1 and a personal computer P11 separately from the IEEE 1394 bus B1 so that the hard disc device H1 can input and output data corresponding to an AV/subcode digital stream signal and a control signal, from and to the IEEE 1394 bus B3 using a specified method similar to that described above.

The personal computer P11 connected to the other end of the IEEE 1394 bus B3 also has an interface (not shown) that can input and output the data corresponding to the AV/subcode digital stream signal and control signal, from and to the IEEE 1394 bus B3 using the specified method.

The personal computer P11 can control and operate the hard disc device H1 for edition.

An audio video edition system according to Embodiment 2 of the present invention is described. The detailed description of the same components as in the above embodiment is omitted.

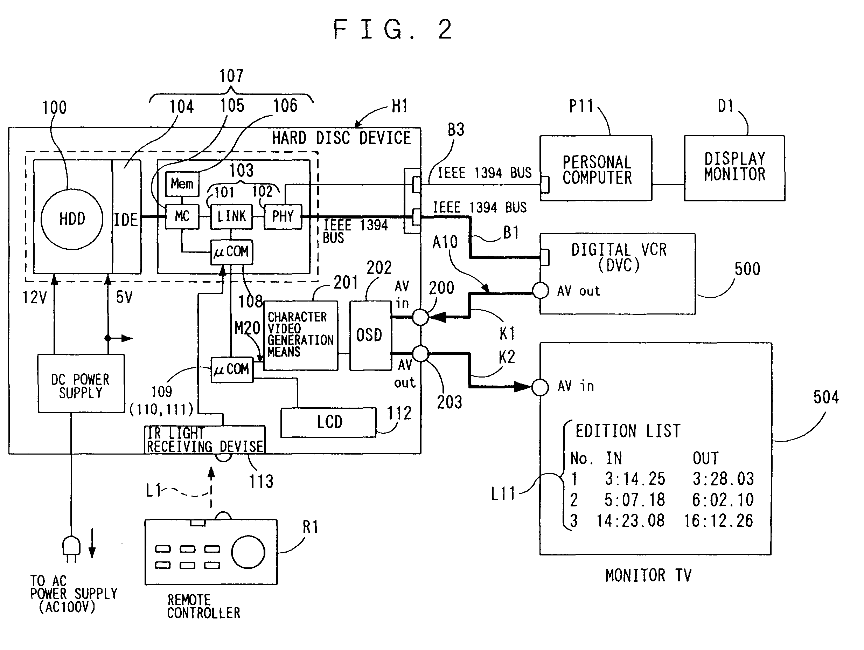

FIG. 2 is a block diagram of a configuration of an audio video edition system showing Embodiment 2 of the present invention. In FIG. 2, the hard disc device H1 comprises an input means (an AV input terminal) 200 for receiving analog video signals A10 from the digital VCR 500, a character video generation means 201 for generating character video signals M20 by converting into character displaying video signals the edition cut-in and cut-out points based on the time codes in the time code memory means 111 and character information on each program number, a superimpose means (OSD) 202 for generating analog video signals by superimposing the character video signals M20 from the character video generation means 201 on the analog video signals A10 from the input means 200, and an output means (an AV output means) 203 for outputting the analog video signals from the superimpose means 202.

An operation of the audio video edition system configured in the above manner is described below.

In this audio video edition system, the hard disc device H1 uses the interface control means 108 to control the digital VCR 500 through the IEEE 1394 bus B1 and to input from the input means 200 through the connection cable K1 the analog video signals A10 from the digital VCR 500 that have been decoded by the VCR codec. On the other hand, based on the time codes in the time code memory means 111 provided in the microcomputer acting as the display control means 109, the hard disc device H1 uses the character video generation means 201 to generate the character video signals M20 by converting into character displaying video signals the edition cut-in and cut-out points corresponding to the time codes and the character information on each program number.

Next, the superimpose means (OSD) 202 generates analog video signals by superimposing the character video signals M20 from the character video generation means 201 on the analog video signals A10 input from the input means 200. These analog video signals are output from the output means 203 and applied to the monitor TV 504 through the connection cable K2 so that edition is carried out while monitoring reproduced images on the monitor TV 504 and an edition list L11 superimposed on the images in the form of character information and corresponding to each edition program.

An audio video edition system according to Embodiment 3 of the present invention is described. The detailed description of the same components as in the above embodiment is omitted.

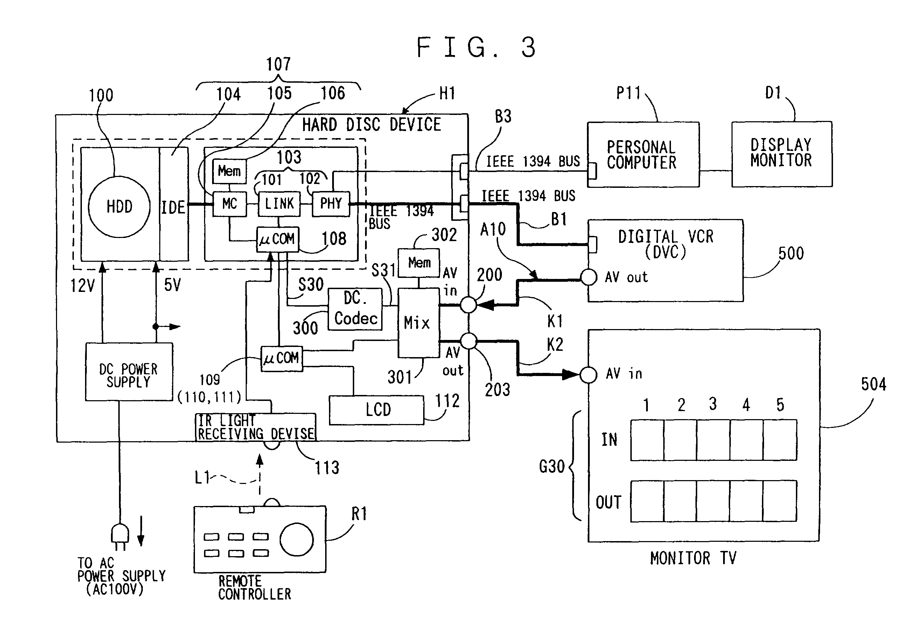

FIG. 3 is a block diagram of a configuration of an audio video edition system showing Embodiment 3 of the present invention. In FIG. 3, the hard disc device H1 is configured that the interface control means 108 generates DC-component small-screen information S30 comprising a plurality of rough sampling images from an AV/subcode digital stream signal reproduced from the hard disc 100 so as to correspond to the edition cut-in and cut-out points and each program number. The hard disc device H1 comprises a small-screen decode means (DC Codec) 300 for decoding the small-screen information S30 from the interface control means 108 into corresponding small-screen video signals S31, a mix means (Mix) 301 controlled by the microcomputer acting as the display control means 109 to mix the small-screen video signals S31 from the small-screen decode means 300 with analog video signals A10 from the digital VCR 500 input through the input means 200 to create video signals for a picture-in-picture (PinP) screen and to output them to the output means 203, and a small-screen creation memory means (Mem) 302 that operates when the mix means 301 creates a picture-in-picture screen, to temporarily store various data such as still images which are based on the small-screen video signals S31 required for the creation.

An operation of the audio video edition system configured in the above manner is described below.

According to this audio video edition system, in the hard disc device H1, the interface control means 108 generates the DC-component small-screen information S30 comprising a plurality of rough sampling images from the AV/subcode digital stream signal reproduced from the hard disc 100 by the disc interface means 107 under the control of the interface control means 108, so as to correspond to the edition cut-in and cut-out points and each program number.

Next, the small-screen decode means 300 decodes the small-screen information S30 from the interface control means 108 into the small-screen video signal S31 corresponding to the information S30. On the other hand, the interface control means 108 controls the digital VCR 500 through the IEEE 1394 bus B1 to receive the analog video signals A10 from the digital VCR 500 decoded by the VCR codec, from the input means 220 through the connection cable K1. The mix means 301 then mixes the small-screen video signals S31 from the small-screen decode means 300 with analog video signals A10 from the digital VCR 500 input through the input means 200 to create video signals for synthesized images constituting a picture-in-picture screen. To create the video signals, various data such as still images based on the small-screen video signals S31 required for the creation is temporarily stored in the small-screen creation memory means 302.

The video signals for a picture-in-picture screen from the mix means 301 are applied to the monitor TV 504 from the output means 203 through the connection cable K2 so that edition is carried out while monitoring reproduced images on the monitor TV 504 and a small edition screen G30 mixed and synthesized on the images and corresponding to the edition programs.

Although Embodiment 3 carries out edition while monitoring the reproduced images on the monitor TV 504 and the small edition screen G30 mixed and synthesized on the images, switching may be executed as required between this method and the edition method including the monitoring of the reproduced images on the monitor TV 504 and the edition list L11 superimposed on the images in the form of character information, as described in Embodiment 2.

An audio video edition system according to Embodiment 4 of the present invention is described. The detailed description of the same components as in the above embodiment is omitted.

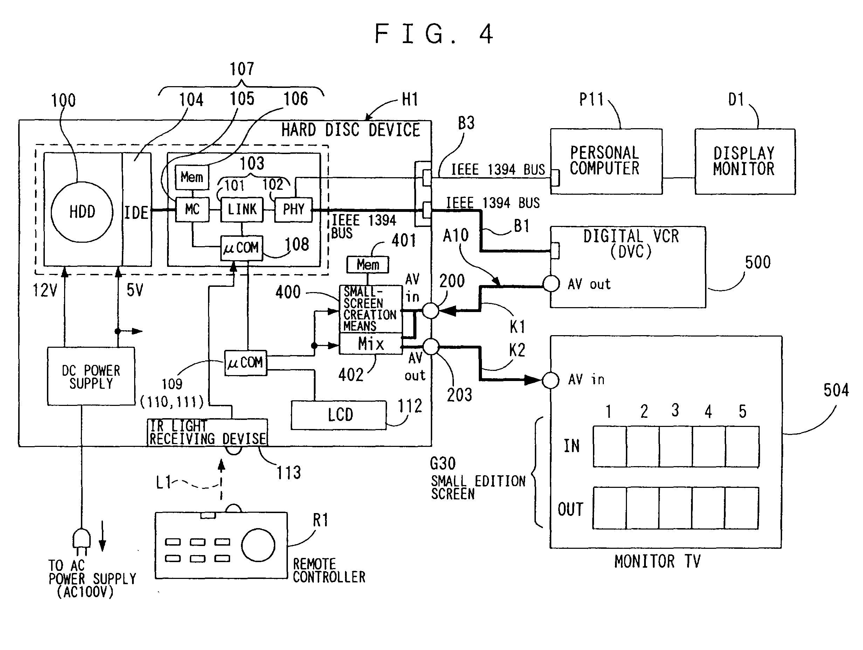

FIG. 4 is a block diagram of a configuration of an audio video edition system showing Embodiment 4 of the present invention. In FIG. 4, the hard disc device H1 comprises a small-screen creation means 400 controlled by the microcomputer acting as the display control means 109 to create still-image small-screen signals by decimating the analog video signals A10 from the digital VCR 500 input through the input means (the AV input terminal) 200 so as to correspond to the edition cut-in and cut-out points and each program number, a small-screen creation memory means (Mem) 401 for temporarily storing still-image small-screen signals from the small-screen creation means 400, and a mix means (Mix) 402 controlled by the microcomputer acting as the display control means 109 to mix the still-image small-screen signals from the small-screen creation means 400 with the analog video signals A10 from the digital VCR 500 to create video signals for a picture-in-picture (PinP) screen and to output the video signals to the output means (the AV output terminal) 203.

An operation of the audio video edition system configured in the above manner is described below.

In this audio video edition system, the hard disc device H1 uses the interface control means 108 to control the digital VCR 500 through the IEEE 1394 bus B1 to receive from the input means 200 through the connection cable K1 the analog video signals A10 from the digital VCR 500 which have been decoded by the VCR codec. On the other hand, under the control of the interface control means 108 and the microcomputer acting as the display control means 109, the small-screen creation means 400 uses the small-screen creation memory means 401 to decimate the analog video signals A10 from the digital VCR 500 input through the input means 200 so as to correspond to the edition cut-in and cut-out points and each program number to create still-image small-screen signals.

Next, under the microcomputer acting as the display control means 109, the mix means 402 mixes the still-image small-screen signals from the small-screen creation means 400 with the analog video signals A10 from the digital VCR 500 to create video signals for a picture-in-picture screen (synthetic images). These video signals are applied to the monitor TV 504 from the output means 203 through the connection cable K2 so that edition is carried out while monitoring reproduced images on the monitor TV 504 and the small edition screen G30 mixed and synthesized on the images and corresponding to the edition programs.

Although Embodiment 4 carries out edition while monitoring the reproduced images on the monitor TV 504 and the small edition screen G30 mixed and synthesized on the images as in Embodiment 3, switching may be executed as required between this method and the edition method including the monitoring of the reproduced images on the monitor TV 504 and the edition list L11 superimposed on the images in the form of character information, as described in Embodiment 2.

As described above, according to the configurations of Embodiments 1 to 4, in editing sounds and videos from the digital VCR 500 using the memory disc 100, the memory disc 100 in the memory disc apparatus H1 can be directly interfaced with an audio and video digital stream bus standardized according to the IEEE 1394 bus B1 to set a recording region on the memory disc 100 for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status.

As a result, sounds and videos from the digital VCR 500 can be edited more inexpensively and more efficiently than in the prior art, and the speed of the edition can be increased.

An audio video edition system according to Embodiment 5 of the present invention is described. The same components as in the conventional audio video edition system shown in FIG. 15 have the same reference numerals, and their detailed description is omitted.

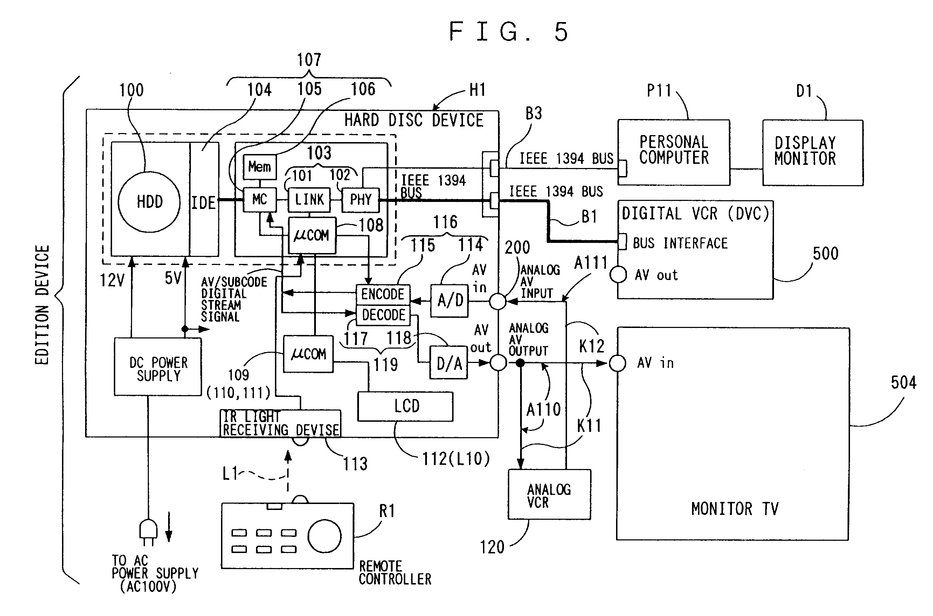

FIG. 5 is a block diagram of a configuration of an audio video edition system showing Embodiment 5 of the present invention. In a basic configuration, this audio video edition system comprises a digital VCR 500 for digitally recording and reproducing sounds and videos on and from a magnetic-tape-shaped digital video cassette (DVC) used as a recording medium, and a hard disc device H1 having a hard disc (HDD) 100 and used as a memory disc device that assumes a medium form different from that of the recording medium of the digital VCR 500 and that is one of the disc-shaped memory discs. The digital VCR 500 and the hard disc device H1 are connected via a single IEEE 1394 bus B1 standardized according to IEEE as a stream bus for audio and video digital stream signals so that sounds and videos input to the hard disc device H1 from the digital VCR 500 through the IEEE 1394 bus B1 are digitally edited using the hard disc 100.

In FIG. 5, the digital VCR 500 comprises a bus interface (a DV terminal) that can use a specified method to input from and output to the IEEE 1394 bus B1 all data corresponding to an AV/subcode digital stream signal as an audio and video digital stream signal comprising DVC-compressed audio and video digital stream signals output from the digital VCR 500 and subcode digital stream signals including time codes, the data also corresponding to control signals comprising commands controlling the digital VCR 500 and status signals for the digital VCR 500. The digital VCR 500 further comprises a bus interface circuit (not shown) for allowing the bus interface to input and output the above data.

On the other hand, the hard disc device H1 is directly connected to the IEEE 1394 bus B1 to input from and output to the IEEE 1394 bus B1 all the data corresponding to the AV/subcode digital stream signal and control signal, using a specified method similar to that described above. The hard disc device H1 comprises a bus interface means 103 comprising a LINK 101 that is a higher-protocol data link layer for audio and video digital stream signals and a PHY 102 that is a lower-protocol physical layer, a memory controller (MC) 105 for enabling all the data corresponding to the AV/subcode digital stream signal and control signal from the bus interface means 103 to be recorded on and reproduced from the hard disc 100 in the units of video signal frames as a mediator for the hard disc 100, a disc interface means 107 comprising a memory (Mem) 106 used for recording on and reproduction from the hard disc 100 and an interface (IDE) 104 for transmitting and receiving signals to and from the hard disc 100, and an interface control means 108 comprising a microcomputer (µCOM) for operating and controlling the bus interface means 103 and the disc interface means 107 based on the control signal, an input means 200 for inputting external analog signals for sounds and videos, an AV/subcode digital stream signal generation means 116 for using an A/D converter (A/D) 114 to convert the analog signals for sounds and videos from the input means 200 into digital signals and then using an encoder (ENCODE) 115 controlled by the interface control means 108 to generate the AV/subcode digital stream signal, an analog video signal generation means 119 controlled by the interface control means 108 to decode the AV/subcode digital stream signal reproduced from the hard disc 100 using a decoder (DECODE) 117 and then generating audio and video analog signals using a D/A converter (D/A) 118, and an output means 204 for outputting audio and video analog signals from the analog video signal generation means 119.

In addition, the hard disc device H1 comprises in a microcomputer (µCOM) 109 controlled by the interface control means 108, a time code detection means 110 for detecting and obtaining from a subcode digital stream signal, time codes corresponding to edition cut-in and cut-out points, and a time code memory means 111 for storing the time codes from the time code detection means 110, and a display (LCD) 112 for displaying the contents of the time code memory means 111 is connected to the microcomputer 109. The hard disc device H1 further comprises a microcomputer 109 acting as a display control means 109 for controlling the display 112 to display the time codes so as to correspond to the number of programs comprising the cut-in and cut-out points.

In addition, the hard disc device H1 further comprises an IR light receiving device 113 for receiving emissions (for example, infrared rays) L1 for operations and commands from a remote controller R1 externally operated using keys, as signals for operations and control executed by the interface control means 108.

An operation of the audio video edition system configured in the above manner is described below.

First, the interface control means 108 controls and operates the digital VCR 500 and the hard disc device H1 to record all or part of an AV/subcode digital stream signal from the digital VCR 500 on the hard disc 100 through the IEEE 1394 bus B1, the bus interface means 103, and the disc interface means 107.

Subsequently, the interface control means 108 reproduces the hard disc 100 through the disc interface means 107, and uses the disc interface means 107 and an analog video signal generation means 119 to convert the AV/subcode digital stream signal into analog video signals A110, which are then applied to a monitor TV 504 from the output means 204 through a connection cable K11.

Next, while monitoring the resulting reproduced images, programs for the cut-in and cut-out points corresponding to an edition start and end points, respectively, are determined. The interface control means 108 reproduces and edits the AV/subcode digital stream signal from the hard disc 100 according to the programs, and in this case, an edition list L10 corresponding to the edition programs is displayed on the display 112 so that edition is carried out while monitoring the reproduced images on the monitor TV 504 and the edition list L10 on the display 112.

After the above edition, based on the data corresponding to the edited AV/subcode digital stream signal and control signal reproduced from the hard disc 100, the analog video signal generation means 119 is controlled by the interface control means 108 to generate audio and video analog signals A110 and to output them from the output means 204. These signals are applied not only to the monitor TV 504 but also to another analog VCR 120 connected to the output means 204 through a connection cable K11 so as to be recorded on the analog VCR 120. Through the input means 200 and the output means 204, the signals can be recorded on and reproduced from the analog VCR 120 connected to these means 200 and 204, as in the digital VCR 500.

In addition, this embodiment can use as an audio and video information source for edition with the hard disc 100, either sounds and videos from the digital VCR 500 connected to the hard disc device H1 through the IEEE 1394 bus B1 or sounds and videos from the analog VCR 120 connected through the input means 200 and the output means 240. Recording and reproduction can be alternately carried out between the digital VCR 500 and the analog VCR 120.

In addition, by using the external remote controller R1 to remote-control the interface control means 108 based on light signals received by the IR light receiving device 113 and corresponding to operations and commands, the interface control means 108 controls the display 112 through the display control means 109 and executes the operations and control based on operations and commands from the remote controller R1.

The bus interface means 103 in the hard disc device H1 is connected not only to the IEEE 1394 bus B1 between the hard disc device H1 and the digital VCR 500 but also to one end of an IEEE 1394 bus B3 provided between the hard disc device H1 and a personal computer P11 separately from the IEEE 1394 bus B1 so that the hard disc device H1 can input and output data corresponding to an AV/subcode digital stream signal and a control signal, from and to the IEEE 1394 bus B3 using a specified method similar to that described above.

The personal computer P11 connected to the other end of the IEEE 1394 bus B3 also has an interface (not shown) that can input and output the data corresponding to the AV/subcode digital stream signal and control signal, from and to the IEEE 1394 bus B3 using the specified method.

The personal computer P11 can control and operate the hard disc device H1 for edition.

An audio video edition system according to Embodiment 6 of the present invention is described. The detailed description of the same components as in the above embodiments is omitted.

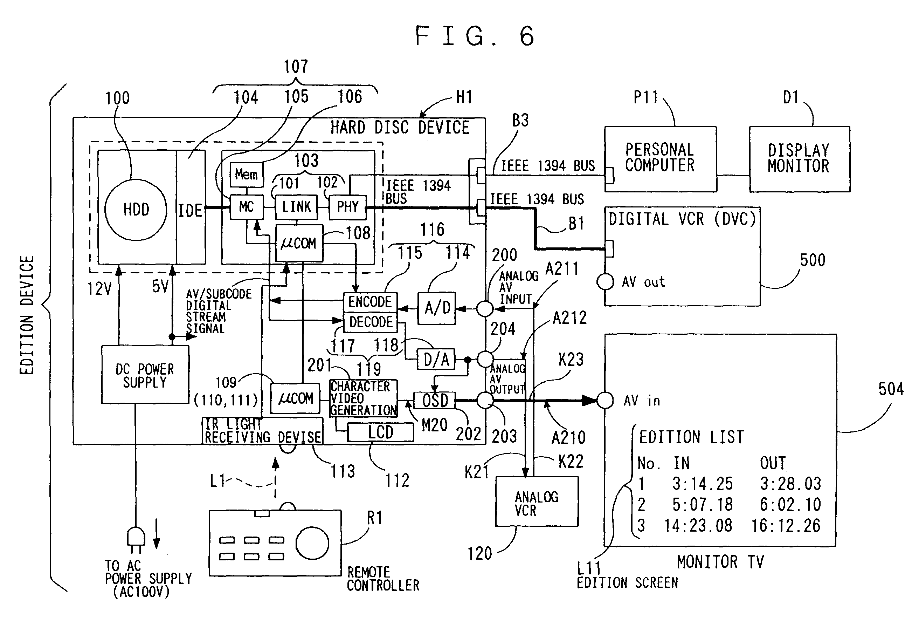

FIG. 6 is a block diagram of a configuration of an audio video edition system showing Embodiment 6 of the present invention. In FIG. 6, the hard disc device H1 comprises a character video generation means 201 for generating character video signals M20 by converting into character displaying video signals the edition cut-in and cut-out points based on the time codes in the time code memory means 111 and character information on each program number, a superimpose means 202 for generating analog video signals A210 by superimposing the character image signals M20 from the character video generation means 201 on the analog video signals from the analog video signal generation means 119, a first output means 203 for outputting the analog video signals A210 from the superimpose means 202, and a second output means 204 for outputting analog video signals A212 from the analog video signal generation means 119.

An operation of the audio video edition system configured in the above manner is described below.

In this audio video edition system, under the control of the interface control means 108, the hard disc device H1 uses the analog video signal generation means 119 to generate the analog video signals A212 from data corresponding to the AV/subcode digital stream signal reproduced from the hard disc 100 by the disc interface means 107. On the other hand, based on the time codes in the time code memory means 111 provided in the microcomputer acting as the display control means 109, the hard disc device H1 uses the character video generation means 201 to generate the character video signals M20 by converting into character displaying video signals the edition cut-in and cut-out points corresponding to the time codes and the character information on each program number.

Next, the superimpose means (OSD) 202 generates the analog video signals A210 by superimposing the character video signals M20 from the character video generation means 201 on the analog video signals A212 input from the analog video signal generation means 119. These analog video signals A210 are output from the first output means 203 and applied to the monitor TV 504 through a connection cable K23 so that edition is carried out while monitoring reproduced images on the monitor TV 504 and an edition list L11 superimposed on the images in the form of character information and corresponding to each edition program.

An audio video edition system according to Embodiment 7 of the present invention is described. The detailed description of the same components as in the above embodiment is omitted.

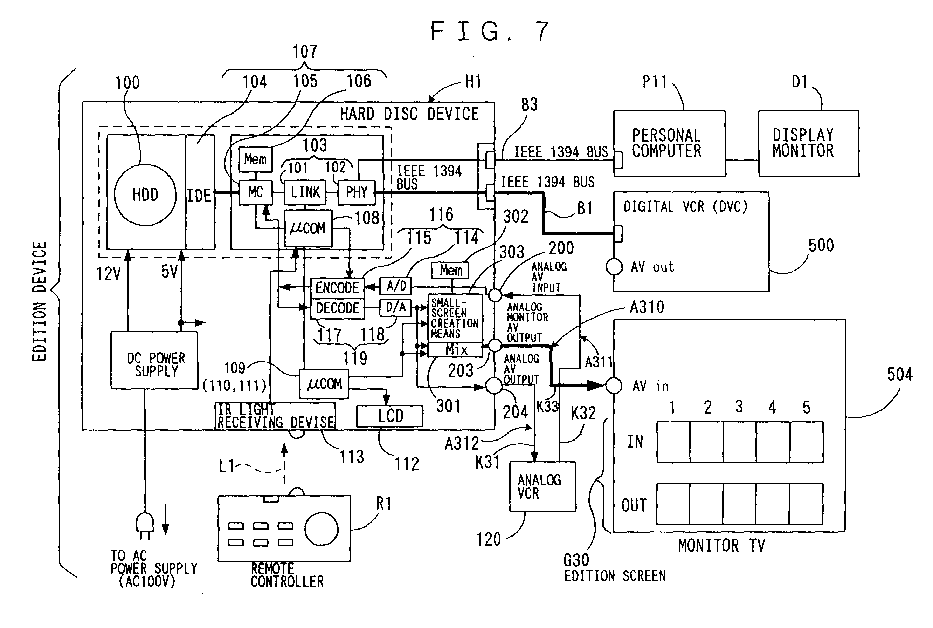

FIG. 7 is a block diagram of a configuration of an audio video edition system showing Embodiment 7 of the present invention. In FIG. 7, the hard disc device H1 comprises a small-screen creation means 303 controlled by the microcomputer acting as the display control means 109 to generate still-image small-screen signals by decimating the analog video signals A312 reproduced from the hard disc 100 by the interface control means 108 and generated by the analog video signal generation means 119, so as to correspond to the edition cut-in and cut-out points and each program number, a small-screen generation memory means (Mem) 302 for temporarily storing still-image small-screen signals from the small-screen creation means 303, and a mix means (Mix) 301 controlled by the display control means 109 to mix the still-image small-screen signals from the small-screen creation means 303 with analog video signals A312 from the analog video signal generation means 119 to create analog video signals A310 for a picture-in-picture (PinP) screen and to output them to the first output means 203

An operation of the audio video edition system configured in the above manner is described below.

In this audio video edition system, under the control of the interface control means 108, the hard disc device H1 uses the analog video signal generation means 119 to generate the analog video signals A312 from the data corresponding to the AV/subcode digital stream signal reproduced by the disc interface means 107 from the hard disc 100. On the other hand, based on the analog video signals A312 from the analog video signal generation section 119, the small-screen creation means 303 generates still-image small-screen signals by decimating the analog video signals A312 so as to correspond to the edition cut-in and cut-out points and each program number, using the small-screen creation memory means 302.

Next, under the control of the microcomputer acting as the display control means 109, the mix means 301 mixes the still-image small-screen signals from the small-screen creation means 303 with the analog video signals A312 from the analog video signal generation means 119 to create the analog video signals A310 for a picture-in-picture screen. These signals A310 are applied to the monitor TV 504 from the first output means 203 through a connection cable K33 so that edition is carried out while monitoring reproduced images on the monitor TV and an small edition screen G30 corresponding to edition programs.

Although Embodiment 7 carries out edition while monitoring the reproduced images on the monitor TV 504 and the small edition screen G30 mixed and synthesized on the images, switching may be executed as required between this method and the edition method including the monitoring of the reproduced images on the monitor TV 504 and the edition list L11 superimposed on the images in the form of character information, as described in Embodiment 6.

As described above, according to the configurations of Embodiments 5 to 7, in editing sounds and videos from the digital VCR 500 or the analog VCR 120 using the hard disc 100, the hard disc 100 in the hard disc apparatus H1 can be directly interfaced with an audio and video digital stream bus standardized according to the IEEE 1394 bus B1 to set a recording region on the hard disc 100 for audio and video digital stream signals in such a way that the recording positions of these digital stream signals are continuous and to record only digital stream signals in this region, thereby maintaining the continuity of data during the recording and reproduction of the digital stream signals and enabling the stream signals to be edited without changing their digital signal status.

Furthermore, under the control of the interface control means 108, the AV/subcode digital stream signal generation means 116 can also generate and record an AV/subcode digital stream signal and a control signal on the hard disc 100 based on audio and video analog signals A111, A211, and A311 input via an external input means 200 through connection cables K12, K22, and K32. Conversely, under the control of the interface control means 108 and based on an AV/subcode digital stream signal and a control signal reproduced from the hard disc 100, the analog video signal generation means 119 can generate and output the audio and video analog signals A110, A212, and A312 from the output means (including the second output means) 204 or the first output means 203 to apply their analog signals A110, A212, and A312 to the monitor TV 504 and another VCR 120. Consequently, relevant reproduced images on the monitor TV 504 can be edited while being monitored, and through the input means 200 and the output means 204, the signals can be record on and reproduced from the analog VCR 120 connected to these means, as in the digital VCR 500.

As a result, sounds and videos from the digital VCR 500 can be edited more inexpensively and more efficiently than in the prior art, and the speed of the edition can be increased.

In addition, between the digital VCR 500 connected to the hard disc device H1 and the analog VCR 120, which is most commonly used in the markets, sounds and videos can be edited based on audio and video digital stream signals transmitted from the digital VCR 500 through the IEEE 1394 bus B1, and the edited sounds and videos can be recorded at any time on the analog VCR 120 as analog signals. Conversely, sounds and videos edited based on audio and video analog signals from the analog VCR 120 can be recorded on the digital VCR 500 as digital signals.

Furthermore, by recording on the hard disc 100, audio and video digital stream signals from the digital VCR 500 beforehand, the digital VCR 500 can be disconnected and edition can be carried out, for example, in another place based on the audio and video digital stream signals in the hard disc 100, using only an edition device principally composed of the hard disc device H1 as well as the monitor TV 504, both of which are connected to the digital VCR. The edited sounds and videos can be recorded at any time on the digital VCR 500 connected to the edition device or on the analog VCR 120 separate from the digital VCR, as required.

An audio and video edition system according to Embodiment 8 of the present invention will be described. Those components of this embodiment that provide effects similar to those of the conventional audio video edition system shown in FIG. 15 have the same reference numerals, and their detailed description is omitted.

A configuration and operation are also described that re-edits only the audio digital stream signals in an AV/subcode digital stream signal recorded on the hard disc 100 after the edition of the AV/subcode digital stream signal using the audio video edition system according to any of Embodiments 1 to 4.

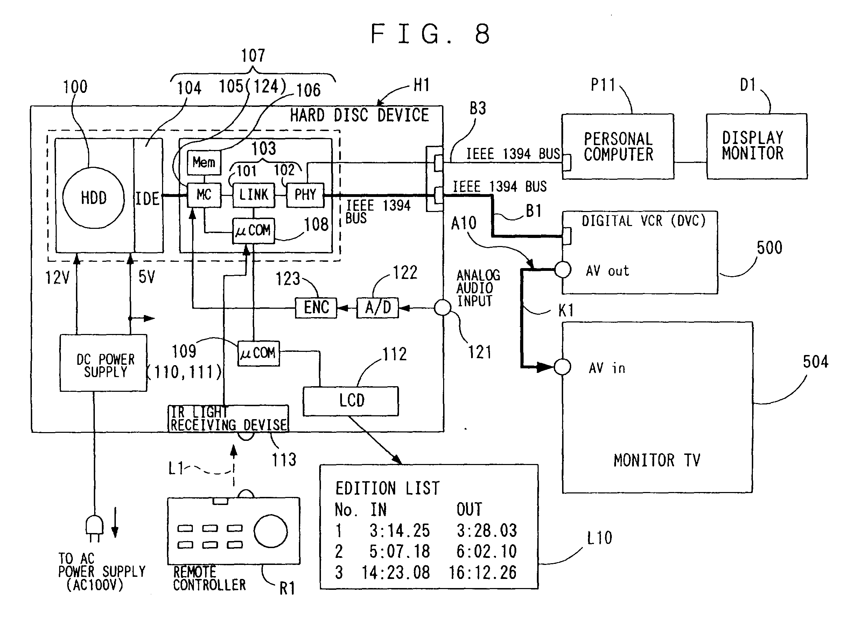

FIGS. 8 to 11 are block diagrams of an audio video edition system showing Embodiment 8 of the present invention.

In the configurations of Embodiments 1 to 4 corresponding to FIGS. 1 to 4, respectively, the audio video edition system showing Embodiment 8 of the present invention comprises an analog audio input means 121 for inputting only analog audio signals that are audio information in the form of analog signals, an A/D converter (A/D) 122 for converting analog audio signals from the analog audio input means 121 into digital audio signals, an encoder (ENC) 123 for DC-compressing and converting the digital audio signals from the A/D converter 122 into PCM audio signals, and a recording means 124 for recording the PCM audio signals from the encoder 123 on the hard disc 100 through the interface means 107, as shown in FIGS. 8 to 11.

With this configuration, separately from the edition by the audio video edition system according to any of Embodiments 1 to 4, in re-editing only the audio digital stream signals in an AV/subcode digital stream signal recorded in the hard disc 100 after the edition of the AV/subcode digital stream signal, the hard disc device H1 uses the A/D converter 122, the encoder 123, and the recording means 124 to convert into PCM audio signals, analog audio signals input from the analog audio input means 121 and to record these audio digital stream signals on the hard disc 100 through the disc interface means 107. The interface control means 108 then reproduces the AV/subcode digital stream signal recorded on the hard disc 100, transmits the signal to the digital VCR 500 through the disc interface means 107, the bus interface means 103, and the IEEE 1394 bus B1. Then, the audio digital stream signals in the AV/subcode digital stream signal can be monitored, while replacing, with predetermined timings controlled by the interface control means 108, some of the audio digital stream signals in the AV/subcode digital stream signal recorded on the hard disc 100 with audio digital stream signals converted based on analog audio signals from the analog audio input means 121.

This embodiment is adapted to record on the hard disc 100 the audio digital stream signals based on the analog audio signals from the analog audio input means 121, and then to replace these audio digital stream signals for some of only the audio digital stream signals in the AV/subcode digital stream signal recorded on the hard disc 100. However, without pre-recording on the hard disc 100 the audio digital stream signals based on the analog audio signals from the analog audio input means 121, the audio digital stream signals in the AV/subcode digital stream signal on the digital VCR 500 may be monitored, while directly replacing, in real time, these signals for some of only the audio digital stream signals in the AV/subcode digital stream signal recorded on the hard disc 100.

As described above, according to Embodiment 8, after the edition of the AV/subcode digital stream signal, the hard disc device H1 can use the interface control means 108 to reproduce the AV/subcode digital stream signal recorded on the hard disc 100 and to transmit it to the digital VCR 500 through the disc interface means 107, the bus interface means 103, and the IEEE 1394 bus B1. Then, the audio digital stream signals in the AV/subcode digital stream signal can be monitored, while replacing, with timings controlled by the interface control means 108, some of the audio digital stream signals recorded on the hard disc 100 with audio digital stream signals converted by the A/D converter 122, the encoder 123, and the recording means 124 based on analog audio signals from the analog audio input means 121.

Consequently, after the edition of the AV/subcode digital stream signal, only the audio digital stream signals in the AV/subcode digital stream signal recorded on the hard disc 100 can be re-edited using an after recording function.

An audio and video edition system according to Embodiment 9 of the present invention will be described. Those components of this embodiment that provide effects similar to those of the conventional audio video edition system shown in FIG. 15 have the same reference numerals, and their detailed description is omitted.

A configuration and operation are also described that re-edits only the audio digital stream signals in an AV/subcode digital stream signal recorded on the hard disc 100 after the edition of the AV/subcode digital stream signal using the audio video edition system according to any of Embodiments 5 to 7.

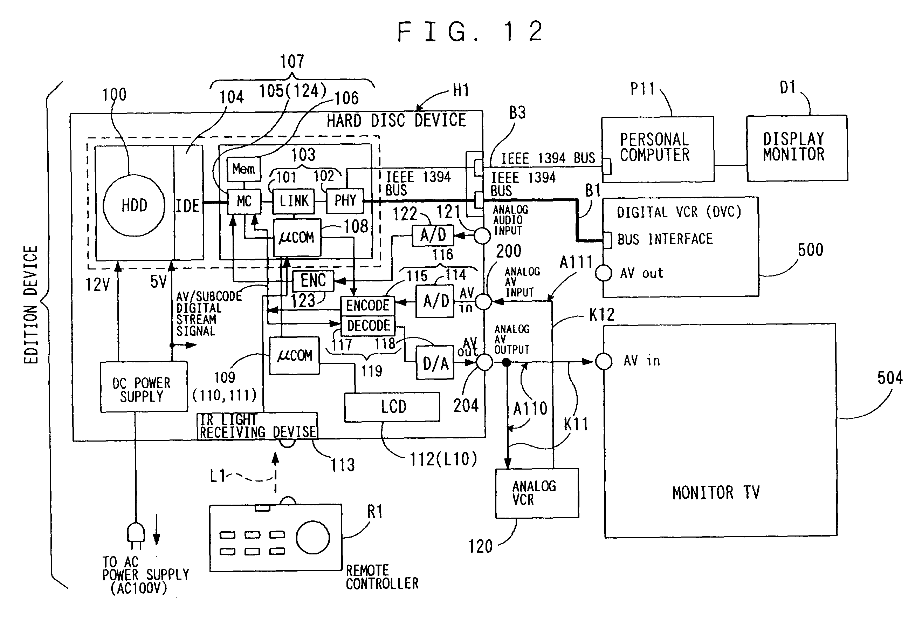

FIGS. 12 to 14 are block diagrams of an audio video edition system showing Embodiment 9 of the present invention.

In the configurations of Embodiments 5 to 7 corresponding to FIGS. 5 to 7, respectively, the audio video edition system showing Embodiment 9 of the present invention comprises an analog audio input means 121 for inputting only analog audio signals that are audio information in the form of analog signals, an A/D converter (A/D) 122 for converting analog audio signals from the analog audio input means 121 into digital audio signals, an encoder (ENC) 123 for DC-compressing and converting the digital audio signals from the A/D converter 122 into PCM audio signals, and a recording means 124 for recording the PCM audio signals from the encoder 123 on the hard disc 100 through the interface means 107, as shown in FIGS. 12 to 14.

With this configuration, separately from the edition by the audio video edition system according to any of Embodiments 5 to 7, in re-editing only the audio digital stream signals in an AV/subcode digital stream signal recorded in the hard disc 100 after the edition of the AV/subcode digital stream signal, the hard disc device H1 uses the A/D converter 122, the encoder 123, and the recording means 124 to convert into PCM audio signals, analog audio signals input from the analog audio input means 121 and to record these audio digital stream signals on the hard disc 100 through the disc interface means 107. The interface control means 108 then reproduces the AV/subcode digital stream signal recorded on the hard disc 100, transmits the signal to the digital VCR 500 through the disc interface means 107, the bus interface means 103, and the IEEE 1394 bus B1. Then, the audio digital stream signals in the AV/subcode digital stream signal can be monitored, while replacing, with predetermined timings controlled by the interface control means 108, some of the audio digital stream signals in the AV/subcode digital stream signal recorded on the hard disc 100 with audio digital stream signals converted based on analog audio signals from the analog audio input means 121.

As described above, according to the configuration of Embodiment 9, after the edition of the AV/subcode digital stream signal, the hard disc device H1 can use the interface control means 108 to reproduce the AV/subcode digital stream signal recorded on the hard disc 100 and to transmit it to the digital VCR 500 through the disc interface means 107, the bus interface means 103, and the IEEE 1394 bus B1. Then, the audio digital stream signals in the AV/subcode digital stream signal can be monitored, while replacing, with timings controlled by the interface control means 108, some of the audio digital stream signals recorded on the hard disc 100 with audio digital stream signals converted by the A/D converter 122, the encoder 123, and the recording means 124 based on analog audio signals from the analog audio input means 121.

Consequently, after the edition of the AV/subcode digital stream signal, only the audio digital stream signals in the AV/subcode digital stream signal recorded on the hard disc 100 can be re-edited using an after recording function or the like.

Although the audio video edition system according to each embodiment has been described in conjunction with the configuration with the hard disc (HDD) as a memory disc, similar effects can be obtained using a configuration with a plurality of rewritable CD-RAMs or DVD-RAMs.

In addition, although the audio video edition system according to each embodiment has been described in conjunction with the configuration with the IEEE 1394 bus as a stream bus, the system can be configured by a bus according to a different standard as long as the bus is standardized for audio and video digital stream signals, and this system can provide similar effects.

## Claims

1. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to AV/subcode digital stream signals consisting of DVC-compressed audio and video digital stream signals output from said digital VCR and subcode digital stream signals including time codes, said data further corresponding to control signals consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signals and control signals, disc interface means capable of recording and reproducing all data corresponding to said AV/subcode digital stream signals and control signals from said bus interface means, on and from said memory disc in said units of video signal frames, and interface control means for operating and controlling said bus and disc interface means using said control signals,
whereby said interface control means controls and operates said digital VCR and said memory disc device to record all or part of an AV/subcode digital stream signal from said digital VCR on said memory disc through said stream bus and said bus and disc interface means; said memory disc is subsequently reproduced to transmit the AV/subcode digital stream signal obtained through said disc and bus interface means and stream bus to said digital VCR; said AV/subcode digital stream signal is decoded by a VCR codec provided inside said digital VCR and having a decorder and converted into analog video signals, which are then applied to a monitor TV; and while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs.

2. The audio video edition system according to claim 1, wherein the memory disc device comprises time code detection means controlled by said interface control means to detect and obtain from a subcode digital stream signal, time codes corresponding to said edition cut-in and cut-out points time code memory means for storing said time codes from said time code detection means, and an display for displaying said contents of said time code memory means, said memory disc device further comprising display control means for controlling said display to display said time codes corresponding to said number of programs consisting of said cut-in and cut-out points so that edition is carried out while monitoring relevant images reproduced on said monitor TV and an edition list displayed on said display so as to correspond to edition programs for said images.

3. The audio video edition system according to claim 2, wherein the memory disc device comprises input means for receiving analog video images from said digital VCR, character video generation means for generating character video signals by converting said edition cut-in and cut-out points based on said time codes in said time code memory means as well as character information for each program number into character displaying video signals, superimpose means for generating analog image signals by superimposing character video signals from said character video generating means on analog video signals from said input means, and output means for outputting the analog video signals from said superimpose means, said analog video signals from said output means being applied to said monitor TV so that edition is carried out while monitoring relevant images reproduced on said monitor TV and an edition list corresponding to edition programs.

4. The audio video edition system according to claim 3, wherein the memory disc device is configured so that said interface means reproduces from said AV/subcode digital stream signal in said memory disc, DC-component small-screen information consisting of a plurality of rough sampling images in such a way as to correspond to said edition cut-in and cut-out points and each program point, wherein said memory disc device comprises small-screen decode means for decoding said small-screen information into small-screen video signals corresponding to said information, mix means controlled by the display control means to output to the output means video signals for picture-in-picture screens created by mixing small-screen video signals from said small-screen decode means with analog video signals from said digital VCR input through said input means, and small-screen-creating memory means for temporarily storing various data such as still images or the like that are based on the small-screen video images and that are required for said creation operation when said mix means creates the picture-in-picture screens, and wherein said video signals for picture-in-picture screens from said mix means are applied to the monitor TV so that edition is carried out while monitoring relevant images reproduced on the monitor TV and small edition screens corresponding to edition programs.

5. The audio video edition system according to claim 3, wherein the memory disc device comprises small-screen creation means controlled by the display control means to create still-image small-screen signals by decimating analog video signals from the digital VCR input from the input means in such a way as to correspond to the edition cut-in and cut-out points and each program number, small-screen creation memory means for temporarily storing still-image small-screen signals from said small-screen creation means, mix means controlled by said display control means to output to the output means video signals for picture-in-picture screens created by mixing the still-image small-screen signals from said small-screen creation means with analog video signals from said digital VCR, and wherein the video signals for picture-in-picture screens from said mix means are applied to the monitor TV through said output means so that edition is carried out while monitoring relevant images reproduced on the monitor TV and small edition screens corresponding to edition programs.

6. The audio video edition system according to claim 1, 2, 3, 4, or 5, wherein the memory disc device comprises light receiving means for receiving light for operations and commands from an external remote controller as signals for operations and control executed by the interface control means so that said interface control means is remote-controlled by said remote controller through said display control means based on said light signals received by said light receiving means and corresponding to operations and commands, so as to execute operations and commands based on said operations and commands from said remote controller.

7. The audio video edition system according to claim 1, 2, 3, 4, or 5, wherein the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

8. The audio video edition system according to claim 6, wherein the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

9. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to AV/subcode digital stream signals consisting of DVC-compressed audio and video digital stream signals output from said digital VCR and subcode digital stream signals including time codes, said data also corresponding to control signals consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signals and control signals, disc interface means capable of recording and reproducing all data corresponding to said AV/subcode digital stream signals and control signals from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signals based on said audio and video analog signals from said input means, analog video signal generation means controlled by said interface control means to generate audio and video analog means using said AV/subcode digital stream signals from said memory disc, and output means for outputting said audio and video analog signals from said analog video signal generation means,
whereby said interface control means controls and operates said digital VCR and said memory disc device to record all or part of an AV/subcode digital stream signal from said digital VCR on said memory disc through said stream bus and said bus and disc interface means; said memory disc is subsequently reproduced to convert the AV/subcode digital stream signal obtained into analog video signals through said disc interface means and said analog video signal generation means, the analog video signals being then applied to a monitor TV from said output means; while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; and said audio and video analog signals based on the edited AV/subcode digital stream signal can be recorded on an analog VCR connected through said output terminal, while the edited AV/subcode digital stream signal can be recorded on said digital VCR through said bus interface means and said stream bus.

10. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to an AV/subcode digital stream signal consisting of DVC-compressed audio and video digital stream signals output from said digital VCR and subcode digital stream signals including time codes, said data also corresponding to a control signal consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signal and control signal, disc interface means capable of recording and reproducing all data corresponding to said AV/subcode digital stream signal and control signal from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signal based on said audio and video analog signals from said input means, analog video signal generation means controlled by said interface control means to generate audio and video analog means using said AV/subcode digital stream signal from said memory disc, and output means for outputting said audio and video analog signals from said analog video signal generation means,
whereby said interface control means controls and operates said digital VCR and said memory disc device to record an AV/subcode digital stream signal obtained from AV/subcode digital stream signal generation means, on said memory disc through said disc interface means; said memory disc is subsequently reproduced to convert the AV/subcode digital stream signal obtained into analog video signals through said disc interface means and said analog video signal generation means, the analog video signals being then applied to a monitor TV from said output means; while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; and said audio and video analog signals based on the edited AV/subcode digital stream signal can be recorded on an analog VCR connected through said output terminal, while the edited AV/subcode digital stream signal can be recorded on said digital VCR through said bus interface means and said stream bus.

11. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein said digital VCR comprises a bus interface capable of using a specified method to input from and output to said stream bus all data corresponding as audio and video digital stream signals to an AV/subcode digital stream signal consisting of DVC-compressed audio and video digital stream signals output from said digital VCR and subcode digital stream signals including time codes, said data also corresponding to a control signal consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signal and control signal, disc interface means capable of recording and reproducing all data corresponding to said AV/subcode digital stream signal and control signal from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signal based on said audio and video analog signals from said input means, analog video signal generation means controlled by said interface control means to generate audio and video analog means using said AV/subcode digital stream signal from said memory disc, and output means for outputting said audio and video analog signals from said analog video signal generation means; said interface control means controls and operates said digital VCR and said memory disc device to record all or part of an AV/subcode digital stream signal from said digital VCR on said memory disc through said disc interface means; said memory disc is subsequently reproduced to convert the AV/subcode digital stream signal obtained into analog video signals through said disc interface means and said analog video signal generation means, the analog video signals being then applied to a monitor TV from said output means, wherein while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; and the audio and video analog signals based on the edited AV/subcode digital stream signal can be recorded on an analog VCR connected through said output terminal, while the edited AV/subcode digital stream signal can be recorded on said digital VCR through said bus interface means and said stream bus.

12. The audio video edition system according to claim 9, 10, or 11, wherein the memory disc device comprises time code detection means controlled by said interface control means to detect and obtain from a subcode digital stream signal, time codes corresponding to the edition cut-in and cut-out points, time code memory means for storing said time codes from said time code detection means, and an display for displaying said contents of said time code memory means and further comprises display control means for controlling said display to display said time codes corresponding to said number of programs consisting of said cut-in and cut-out points so that edition is carried out while monitoring relevant images reproduced on said monitor TV and an edition list displayed on said display so as to correspond to an edition program for said images.

13. The audio video edition system according to claim 12, wherein said memory disc device comprises character video generation means for generating character video signals by converting the edition cut-in and cut-out points based on the time codes in the time code memory means as well as character information for each program number into character displaying video signals, superimpose means for generating analog image signals by superimposing said character video signals from said character video generating means on analog video signals from said analog video signal generation means, a first output means for outputting the analog video signals from said superimpose means, and a second output means for outputting the analog video signals from said analog video signal generation means, and wherein the analog video signals from said first output means are applied to said monitor TV so that edition is carried out while monitoring relevant reproduced images and an edition list corresponding to edition programs.

14. The audio video edition system according to claim 13, wherein the memory disc device comprises small-screen creation means controlled by the display control means to create still-image small-screen signals by decimating analog video signals from the analog video signal generation means in such a way as to correspond to the edition cut-in and cut-out points and each program number, small-screen creation memory means for temporarily storing the still-image small-screen signals from said small-screen creation means, mix means controlled by said display control means to output to said first output means video signals for picture-in-picture screens created by mixing the still-image small-screen signals from said small-screen creation means with the analog video signals from said analog video signal generation means, and wherein the video signals for picture-in-picture screens from said mix means are applied to the monitor TV through said first output means so that edition is carried out while monitoring relevant images reproduced on the monitor TV and small edition screens corresponding to edition programs.

15. The audio video edition system according to claim 9, 10, 11, 13, or 14, wherein the memory disc device comprises light receiving means for receiving light for operations and commands from an external remote controller as signals for operations and control executed by the interface control means so that said interface control means is remote-controlled by said remote controller through said display control means based on the light signals received by said light receiving means and corresponding to operations and commands, so as to execute operations and commands based on said operations and commands from said remote controller.

16. The audio video edition system according to claim 12, wherein the memory disc device comprises light receiving means for receiving light for operations and commands from an external remote controller as signals for operations and control executed by said interface control means so that said interface control means is remote-controlled by said remote controller through said display control means based on the light signals received by said light receiving means and corresponding to operations and commands, so as to execute operations and commands based on said operations and commands from said remote controller.

17. The audio video edition system according to claim 9, 10, 11, 13, 14, or 16, wherein the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

18. The audio video edition system according to claim 12, wherein the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

19. The audio video edition system according to claim 15, wherein the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

20. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to AV/subcode digital stream signals consisting of DVC-compressed audio and video digital stream signals output from said digital VCR and subcode digital stream signals including time codes, said data also corresponding to control signals consisting of digital VCR controlling commands and status signals, said digital VCR further comprising a bus interface circuit used by said bus interface to input and output said data,
said memory disc device is directly connected to said stream bus and comprises bus interface means capable of using said specified method to input from and output to said stream bus all data corresponding to said AV/subcode digital stream signals and control signals, disc interface means capable of recording and reproducing all data corresponding to said AV/subcode digital stream signals and control signals from said bus interface means, on and from said memory disc in said units of video signal frames, interface control means for operating and controlling said bus and disc interface means using said control signals, analog audio input means for inputting only analog audio signals that are audio information in an analog signal form, an A/D converter for converting said analog audio signals from said analog audio input means into digital audio signals, an encoder for DV-compressing said digital audio signals from said A/D converter into PCM audio signals, and recording means for recording said PCM audio signals from said encoder on said memory disc through said disc interface means,
whereby said interface control means controls and operates said digital VCR and said memory disc device to record all or part of an AV/subcode digital stream signal from said digital VCR on said memory disc through said stream bus and said bus and disc interface means; said memory disc is subsequently reproduced to transmit said AV/subcode digital stream signal obtained, through said disc and bus interface means and said stream bus to said digital VCR; a VCR codec provided inside said digital VCR and having a decoder decodes the AV/subcode digital stream signal into analog video signals, which are then applied to a monitor TV; while relevant images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; after said edition of the AV/subcode digital stream signal and when re-editing only the audio digital stream signals in the AV/subcode digital stream signal recorded on said memory disc, said memory disc device converts analog audio signals from said analog audio input means into said PCM audio signals using said A/D converter, said encoder, and said recording means, records this audio digital stream signal on said memory disc through said disc interface means, reproduces the AV/subcode digital stream signal recorded on said memory disc using said interface control means, and transmits the signal to said digital VCR through said disc and bus interface means and said stream bus; and the audio digital stream signals in the AV/subcode digital stream signal are monitored, while replacing, with timings controlled by said interface control means, some of the audio digital stream signals in the AV/subcode digital stream signal recorded on said memory disc with audio digital stream signals converted based on the analog audio signals from said analog audio input means.

21. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to an AV/subcode digital stream signal consisting of DVC-compressed audio and video digital stream signals output from said digital VCR and subcode digital stream signals including time codes, said data also corresponding to a control signal consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signal and control signal, disc interface means capable of recording and reproducing all data corresponding to said AV/subcode digital stream signal and control signal from said bus interface means, on and from said memory disc in said units of video signal frames, interface control means for operating and controlling said bus and disc interface means using said control signals, analog audio input means for inputting only analog audio signals that are audio information in an analog signal form, an A/D converter for converting said analog audio signals from said analog audio input means into digital audio signals, an encoder for DV-compressing said digital audio signals from said A/D converter into PCM audio signals, and recording means for recording said PCM audio signals from said encoder on said memory disc through said disc interface means,
whereby said interface control means controls and operates said digital VCR and said memory disc device to record all or part of an AV/subcode digital stream signal from said digital VCR on said memory disc through said stream bus and said bus and disc interface means; said memory disc is subsequently reproduced to transmit the AV/subcode digital stream signal obtained, through said disc and bus interface means and said stream bus to said digital VCR; a VCR codec provided inside said digital VCR and having a decoder decodes said AV/subcode digital stream signal into analog video signals, which are then applied to a monitor TV; while relevant images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; after the edition of the AV/subcode digital stream signal and when re-editing only the audio digital stream signals in the AV/subcode digital stream signal recorded on said memory disc, said interface control means reproduces the AV/subcode digital stream signal recorded on said memory disc and transmits the signal to said digital VCR through said disc and bus interface means and said stream bus; and the audio digital stream signal in the AV/subcode digital stream signal are monitored, while replacing, with timings controlled by said interface control means, some of the audio digital stream signal in the AV/subcode digital stream signal recorded on said memory disc with audio digital stream signals converted based on the analog audio signals from said analog audio input means.

22. The audio video edition system according to claim 20 or 21, wherein in order to edit sounds and videos input to said memory disc device, the memory disc device comprises time code detection means controlled by the interface control means to detect and obtain from a subcode digital stream signal, time codes corresponding to the edition cut-in and cut-out points, time code memory means for storing the time codes from the time code detection means, and an display for displaying the contents of said time code memory means and further comprises display control means for controlling said display to display said time codes corresponding to the number of programs consisting of said cut-in and cut-out points, and wherein edition is carried out while monitoring relevant images reproduced on the monitor TV and an edition list displayed on said display so as to correspond to edition programs for the images.

23. The audio video edition system according to claim 22, wherein in order to edit sounds and videos input to said memory disc device, the memory disc device comprises input means for receiving analog video images from the digital VCR, character video generation means for generating character video signals by converting the edition cut-in and cut-out points based on the time codes in the time code memory means as well as character information for each program number into character displaying video signals, superimpose means for generating analog image signals by superimposing character video signals from said character video generating means on analog video signals from said input means, and output means for outputting the analog video signals from said superimpose means, and wherein the analog video signals from said output means are applied to the monitor TV so that edition is carried out while monitoring relevant images reproduced on the monitor TV and an edition list corresponding to edition programs.

24. The audio video edition system according to claim 23, wherein in order to edit sounds and videos input to said memory disc device, the memory disc device is configured so that in editing sounds and videos input to the memory disc device, the interface means reproduces from the AV/subcode digital stream signal in the memory disc, DC-component small-screen information consisting of a plurality of rough sampling images in such a way as to correspond to the edition cut-in and cut-out points and each program point, wherein the memory disc device comprises small-screen decode means for decoding the small-screen information into small-screen video signals corresponding to the information, mix means controlled by the display control means to output to the output means video signals for picture-in-picture screens created by mixing small-screen video signals from said small-screen decode means with analog video signals from the digital VCR input through the input means, and small-screen-creating memory means for temporarily storing various data such as still images or the like that are based on the small-screen video images and that are required for the creation operation when said mix means creates said picture-in-picture screens, and wherein said video signals for picture-in-picture screens from said mix means are applied to the monitor TV through said output means so that edition is carried out while monitoring relevant images reproduced on the monitor TV and small edition screens corresponding to edition programs.

25. The audio video edition system according to claim 23, wherein in order to edit sounds and videos input to said memory disc device, the memory disc device comprises small-screen creation means controlled by the display control means to create still-image small-screen signals by decimating analog video signals from the digital VCR input from the input means in such a way as to correspond to the edition cut-in and cut-out points and each program number, small-screen creation memory means for temporarily storing the still-image small-screen signals from said small-screen creation means, and mix means controlled by said display control means to output to the output means video signals for picture-in-picture screens created by mixing the still-image small-screen signals from said small-screen creation means with the analog video signals from said digital VCR, and wherein the video signals for picture-in-picture screens from said mix means are applied to the monitor TV through said output means so that edition is carried out while monitoring relevant images reproduced on the monitor TV and small edition screens corresponding to edition programs.

26. The audio video edition system according to claim 20, 21, 23, 24, or 25, wherein in order to edit sounds and videos input to said memory disc device, the memory disc device comprises light receiving means for receiving light for operations and commands from an external remote controller as signals for operations and control executed by the interface control means so that said interface control means is remote-controlled by said remote controller through said display control means based on the light signals received by said light receiving means and corresponding to operations and commands, so as to execute operations and commands based on said operations and commands from said remote controller.

27. The audio video edition system according to claim 22, wherein in order to edit sounds and videos input to said memory disc device, the memory disc device comprises light receiving means for receiving light for operations and commands from an external remote controller as signals for operations and control executed by the interface control means so that said interface control means is remote-controlled by said remote controller through said display control means based on the light signals received by said light receiving means and corresponding to operations and commands, so as to execute operations and commands based on said operations and commands from said remote controller.

28. The audio video edition system according to claim 20, 21, 23, 24, 25, or 27, wherein in order to edit sounds and videos input to said memory disc device, the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein said memory disc device is controlled and operated for edition by a personal computer having an interface connected to the other end of said different stream bus so as to use said specified method to input from and output to the different stream bus, said data corresponding to said AV/subcode digital stream signal and control signal.

29. The audio video edition system according to claim 20, 21, 23, 24, 25, or 27, wherein in order to edit sounds and videos input to said memory disc device, the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein said memory disc device is controlled and operated for edition by a personal computer having an interface connected to the other end of said different stream bus so as to use said specified method to input from and output to said different stream bus, said data corresponding to said AV/subcode digital stream signal and control signal.

30. The audio video edition system according to claim 26, wherein in order to edit sounds and videos input to said memory disc device, the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

31. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to AV/subcode digital stream signals consisting of DVC-compressed audio and video digital stream output from said digital VCR and subcode digital stream signals including time codes, said data also corresponding to control signals consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signals and control signals, disc interface means capable of recording and reproducing all data corresponding to said AV/subcode digital stream signals and control signals from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signals based on said audio and video analog signals from said input means, analog video signal generation means controlled by said interface control means to generate audio and video analog means using said AV/subcode digital stream signals from said memory disc, output means for outputting said audio and video analog signals from said analog video signal generation means, analog audio input means for inputting only analog audio signals that are audio information in an analog signal form, an A/D converter for converting said analog audio signals from said analog audio input means into digital audio signals, an encoder for DV-compressing said digital audio signals from said A/D converter into PCM audio signals, and recording means for recording said PCM audio signals from said encoder on said memory disc through said disc interface means,
whereby said interface control means controls and operates said digital VCR and said memory disc device to record all or part of an AV/subcode digital stream signal from said digital VCR on said memory disc through said stream bus and said bus and disc interface means; said memory disc is subsequently reproduced to convert said AV/subcode digital stream signal obtained into analog video signals through said disc interface means and said analog video signal generation means, the analog video signals being then applied to a monitor TV from said output means; while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; said audio and video analog signals based on the edited AV/subcode digital stream signal can be recorded on an analog VCR connected through said output terminal, while the edited AV/subcode digital stream signal can be recorded on said digital VCR through said bus interface means and said stream bus, wherein in re-editing only the audio digital stream signals in the AV/subcode digital stream signal recorded on said memory disc after the edition of the AV/subcode digital stream signal, said memory disc device uses said A/D converter, said encoder, and said recording means to convert analog audio signals input from said analog audio input means into said PCM audio signals, which are recorded on said memory disc through said disc interface means as audio digital stream signals; said interface control means reproduces the AV/subcode digital stream signal recorded on said memory disc and transmits it through said disc and bus interface means and said stream bus to said digital VCR; and the audio digital stream signals in the AV/subcode digital stream signal are monitored, while replacing, with timings controlled by said interface control means, some of the audio digital stream signals in the AV/subcode digital stream signal recorded on said memory disc with audio digital stream signals converted based on the analog audio signals from said analog audio input means.

32. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to an AV/subcode digital stream signal consisting of DVC-compressed audio and video digital stream signals output from said digital VCR and subcode digital stream signals including time codes, said data also corresponding to a control signal consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signal and control signal, disc interface means capable of recording and reproducing all data corresponding to said AV/subcode digital stream signal and control signal from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signal based on said audio and video analog signals from said input means, analog video signal generation means controlled by said interface control means to generate audio and video analog means using said AV/subcode digital stream signal from said memory disc, output means for outputting said audio and video analog signals from said analog video signal generation means, analog audio input means for inputting only analog audio signals that are audio information in an analog signal form, an A/D converter for converting said analog audio signals from said analog audio input means into digital audio signals, an encoder for DV-compressing said digital audio signals from said A/D converter into PCM audio signals, and recording means for recording said PCM audio signals from said encoder on said memory disc through said disc interface means,
whereby said interface control means controls and operates said digital VCR and said memory disc device to record all or part of an AV/subcode digital stream signal from said digital VCR on said memory disc through said stream bus and said bus and disc interface means; said memory disc is subsequently reproduced to convert the AV/subcode digital stream signal obtained into analog video signals through said disc interface means and said analog video signal generation means, the analog video signals being then applied to a monitor TV from said output means; while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; the audio and video analog signals based on the edited AV/subcode digital stream signal can be recorded on an analog VCR connected through said output terminal, while the edited AV/subcode digital stream signal can be recorded on said digital VCR through said bus interface means and said stream bus; in re-editing only the audio digital stream signals in the AV/subcode digital stream signal recorded on said memory disc after the edition of the AV/subcode digital stream signal, said interface control means reproduces said AV/subcode digital stream signal recorded on said memory disc and transmits it through said disc and bus interface means and said stream bus to said digital VCR; and in the audio digital stream signals in the AV/subcode digital stream signal are monitored, while replacing, with timings controlled by said interface control means, some of the audio digital stream signals in the AV/subcode digital stream signal recorded on said memory disc with audio digital stream signals converted based on the analog audio signals from said analog audio input means.

33. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to AV/subcode digital stream signals consisting of DVC-compressed audio and video digital stream signals output from said digital VCR and subcode digital stream signals including time codes, said data also corresponding to control signals consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signals and control signals, disc interface means capable of recording and reproducing all data corresponding to said AV/subcode digital stream signals and control signals from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signals based on said audio and video analog signals from said input means, analog video signal generation means controlled by said interface control means to generate audio and video analog means using said AV/subcode digital stream signals from said memory disc, output means for outputting said audio and video analog signals from said analog video signal generation means, analog audio input means for inputting only analog audio signals that are audio information in an analog signal form, an A/D converter for converting said analog audio signals from said analog audio input means into digital audio signals, an encoder for DV-compressing said digital audio signals from said A/D converter into PCM audio signals, and recording means for recording said PCM audio signals from said encoder on said memory disc through said disc interface means,
whereby said interface control means controls and operates said digital VCR and said memory disc device to record an AV/subcode digital stream signal from said digital VCR on said memory disc through said disc interface means; said memory disc is subsequently reproduced to convert the AV/subcode digital stream signal obtained into analog video signals through said disc interface means and said analog video signal generation means, the analog video signals being then applied to a monitor TV from said output means; while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; the audio and video analog signals based on the edited AV/subcode digital stream signal can be recorded on an analog VCR connected through said output terminal, while the edited AV/subcode digital stream signal can be recorded on said digital VCR through said bus interface means and said stream bus; in re-editing only the audio digital stream signals in the AV/subcode digital stream signal recorded on said memory disc after the edition of the AV/subcode digital stream signal, said memory disc device uses said A/D converter, said encoder, and said recording means to convert analog audio signals input from said analog audio input means into said PCM audio signals, which are recorded on said memory disc through said disc interface means as audio digital stream signals; said interface control means reproduces said AV/subcode digital stream signal recorded on said memory disc and transmits it through said disc and bus interface means and said stream bus to said digital VCR; and the audio digital stream signals in the AV/subcode digital stream signal are monitored, while replacing, with timings controlled by said interface control means, some of the audio digital stream signals in the AV/subcode digital stream signal recorded on said memory disc with audio digital stream signals converted based on the analog audio signals from said analog audio input means.

34. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to an AV/subcode digital stream signal consisting of DVC-compressed audio and video digital stream signals output from said digital VCR and subcode digital stream signals including time codes, said data also corresponding to a control signal consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signal and control signal, disc interface means capable of recording and reproducing all data corresponding to said AV/subcode digital stream signal and control signal from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signal based on said audio and video analog signals from said input means, analog video signal generation means controlled by said interface control means to generate audio and video analog means using said AV/subcode digital stream signal from said memory disc, output means for outputting said audio and video analog signals from said analog video signal generation means, analog audio input means for inputting only analog audio signals that are audio information in an analog signal form, an A/D converter for converting said analog audio signals from said analog audio input means into digital audio signals, an encoder for DV-compressing said digital audio signals from said A/D converter into PCM audio signals, and recording means for recording said PCM audio signals from said encoder on said memory disc through said disc interface means, whereby said interface control means controls and operates said digital VCR and said memory disc device to record an AV/subcode digital stream signal from said digital VCR on said memory disc through said disc interface means; said memory disc is subsequently reproduced to convert the AV/subcode digital stream signal obtained into analog video signals through said disc interface means and said analog video signal generation means, the analog video signals being then applied to a monitor TV from said output means; while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; the audio and video analog signals based on the edited AV/subcode digital stream signal can be recorded on an analog VCR connected through said output terminal, while the edited AV/subcode digital stream signal can be recorded on said digital VCR through said bus interface means and said stream bus; in re-editing only the audio digital stream signals in the AV/subcode digital stream signal recorded on said memory disc after the edition of the AV/subcode digital stream signal, said interface control means reproduces the AV/subcode digital stream signal recorded on said memory disc and transmits it through said disc and bus interface means and said stream bus to said digital VCR; and the audio digital stream signals in the AV/subcode digital stream signal are monitored, while replacing, with timings controlled by said interface control means, some of the audio digital stream signals in the AV/subcode digital stream signal recorded on said memory disc with audio digital stream signals converted based on the analog audio signals from said analog audio input means.

35. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to AV/subcode digital stream signals consisting of DVC-compressed audio and video digital stream signals output from said digital VCR and subcode digital stream signals including time codes, said data also corresponding to control signals consisting of digital VCR controlling commands and status signals, said digital VCR further comprising a bus interface circuit used by said bus interface to input and output said data, and said memory disc device is directly connected to said stream bus and comprises bus interface means capable of using said specified method to input from and output to said stream bus all data corresponding to said AV/subcode digital stream signals and control signals, disc interface means capable of recording and reproducing all data corresponding to said AV/subcode digital stream signals and control signals from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signals based on said audio and video analog signals from said input means, analog video signal generation means controlled by said interface control means to generate audio and video analog means using said AV/subcode digital stream signals from said memory disc, output means for outputting said audio and video analog signals from said analog video signal generation means, analog audio input means for inputting only analog audio signals that are audio information in an analog signal form, an A/D converter for converting said analog audio signals from said analog audio input means into digital audio signals, an encoder for DV-compressing said digital audio signals from said A/D converter into PCM audio signals, and recording means for recording said PCM audio signals from said encoder on said memory disc through said disc interface means, whereby said interface control means controls and operates said digital VCR and said memory disc device to record all or part of an AV/subcode digital stream signal from said digital VCR on said memory disc through said stream bus and said bust and disc interface means and records an AV/subcode digital stream signal into which analog signals from said input signals are converted, on said memory disc through said disc interface means; said memory disc is subsequently reproduced to convert the AV/subcode digital stream signal obtained into analog video signals through said disc interface means and said analog video signal generation means, the analog video signals being then applied to a monitor TV from said output means; while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; the audio and video analog signals based on the edited AV/subcode digital stream signal can be recorded on an analog VCR connected through said output terminal, while the edited AV/subcode digital stream signal can be recorded on said digital VCR through said bus interface means and said stream bus; in re-editing only the audio digital stream signals in the AV/subcode digital stream signal recorded on said memory disc after the edition of the AV/subcode digital stream signal, said memory disc device uses said A/D converter, said encoder, and said recording means to convert analog audio signals input from said analog audio input means into said PCM audio signals, which are recorded on said memory disc through said disc interface means as audio digital stream signals; said interface control means reproduces said AV/subcode digital stream signal recorded on said memory disc and transmits it through said disc and bus interface means and said stream bus to said digital VCR; and the audio digital stream signals in the AV/subcode digital stream signal are monitored, while replacing, with timings controlled by said interface control means, some of the audio digital stream signals in the AV/subcode digital stream signal recorded on said memory disc with audio digital stream signals converted based on the analog audio signals from said analog audio input means.

36. An audio video edition system comprising a digital VCR for digitally recording and reproducing sounds and videos on and from a recording medium, and a memory disc device having a memory disc that is a recording medium different from said recording medium, said digital VCR and said memory disc device being connected via a single stream bus standardized as a bus for audio and video digital stream signals, said memory disc being used to digitally edit sounds and videos input to said memory disc device from said digital VCR through said stream bus, wherein
said digital VCR comprises a bus interface capable of using a specified method to input from and output to said stream bus all data corresponding as audio and video digital stream signals to an AV/subcode digital stream signal consisting of DVC-compressed audio and video digital stream signals output from said digital VCR and subcode digital stream signals including time codes, said data also corresponding to a control signal consisting of digital VCR controlling commands and status signals, said digital VCR further comprising a bus interface circuit used by said bus interface to input and output said data, and
said memory disc device is directly connected to said stream bus and comprises bus interface means capable of using said specified method to input from and output to said stream bus all data corresponding to said AV/subcode digital stream signal and control signal, disc interface means capable of recording and reproducing all data corresponding to said AV/subcode digital stream signal and control signal from said bus interface means, on and from said memory disc in said units of video signal frames, interface control means for operating and controlling said bus and disc interface means using said control signals, input means for inputting external analog signals for sounds and videos, AV/subcode digital stream generation means controlled by said interface control means to generate said AV/subcode digital stream signal based on said audio and video analog signals from said input means, analog video signal generation means controlled by said interface control means to generate audio and video analog means using said AV/subcode digital stream signal from said memory disc, output means for outputting said audio and video analog signals from said analog video signal generation means, analog audio input means for inputting only analog audio signals that are audio information in an analog signal form, an A/D converter for converting said analog audio signals from said analog audio input means into digital audio signals, an encoder for DV-compressing said digital audio signals from said A/D converter into PCM audio signals, and recording means for recording said PCM audio signals from said encoder on said memory disc through said disc interface means,
whereby said interface control means controls and operates said digital VCR and said memory disc device to record all or part of an AV/subcode digital stream signal from said digital VCR on said memory disc through said stream bus and said bust and disc interface means and records an AV/subcode digital stream signal into which analog signals from said input signals are converted, on said memory disc through said disc interface means; said memory disc is subsequently reproduced to convert the AV/subcode digital stream signal obtained into analog video signals through said disc interface means and said analog video signal generation means, the analog video signals being then applied to a monitor TV from said output means; while images reproduced on said monitor TV are being monitored, programs for cut-in and cut-out points that are an edition start and end points, respectively, are determined, with said interface control means carrying out edition while reproducing said AV/subcode digital stream signal from said memory disc according to said programs; the audio and video analog signals based on the edited AV/subcode digital stream signal can be recorded on an analog VCR connected through said output terminal, while the edited AV/subcode digital stream signal can be recorded on said digital VCR through said bus interface means and said stream bus; in re-editing only the audio digital stream signals in the AV/subcode digital stream signal recorded on said memory disc after the edition of the AV/subcode digital stream signal, said interface control means reproduces said AV/subcode digital stream signal recorded on said memory disc and transmits it through said disc and bus interface means and said stream bus to said digital VCR; and the audio digital stream signals in the AV/subcode digital stream signal are monitored, while replacing, with timings controlled by said interface control means, some of the audio digital stream signals in the AV/subcode digital stream signal recorded on said memory disc with audio digital stream signals converted based on the analog audio signals from said analog audio input means.

37. The audio video edition system according to claim 31, 32, 33, 34, 35, or 36, wherein in order to edit sounds and videos input to the memory disc device, the memory disc device comprises time code detection means controlled by said interface control means to detect and obtain from a subcode digital stream signal, time codes corresponding to the edition cut-in and cut-out points, time code memory means for storing the time codes from said time code detection means, and a display for displaying the contents of said time code memory means, said memory disc device further comprising display control means for controlling said display to display said time codes so as to correspond to the number of programs consisting of said cut-in and cut-out points, and wherein edition is carried out while monitoring relevant images reproduced on the monitor TV and an edition list displayed on said display so as to correspond to edition programs for the images.

38. The audio video edition system according to claim 37, wherein in order to edit sounds and videos input to the memory disc device, the memory disc device comprises character video generation means for generating character video signals by converting the edition cut-in and cut-out points based on the time codes in the time code memory means as well as character information for each program number into character displaying video signals, superimpose means for generating analog image signals by superimposing the character video signals from said character video generating means on analog video signals from the analog video signal generation means, a first output means for outputting the analog video signals from said superimpose means, and a second output means for outputting the analog video signals from said analog video signal generation means, and wherein the analog video signals from said first output means are applied to the monitor TV so that edition is carried out while monitoring relevant reproduced images and an edition list corresponding to edition programs.

39. The audio video edition system according to claim 38, wherein in order to edit sounds and videos input to the memory disc device, the memory disc device comprises small-screen creation means controlled by the display control means to create still-image small-screen signals by decimating analog video signals from the analog video signal generation means in such a way as to correspond to the edition cut-in and cut-out points and each program number, small-screen creation memory means for temporarily storing the still-image small-screen signals from said small-screen creation means, mix means controlled by said display control means to output to said first output means video signals for picture-in-picture screens created by mixing the still-image small-screen signals from said small-screen creation means with the analog video signals from said analog video signal generation means, and wherein said video signals for picture-in-picture screens from said mix means are applied to said monitor TV through said first output means so that edition is carried out while monitoring relevant images reproduced on said monitor TV and small edition screens corresponding to edition programs.

40. The audio video edition system according to claim 31, 32, 33, 34, 35, 36, 38, or 39, wherein in order to edit sounds and videos input to the memory disc device, the memory disc device comprises light receiving means for receiving light for operations and commands from an external remote controller as signals for operations and control executed by the interface control means so that said interface control means is remote-controlled by said remote controller through said display control means based on the light signals received by said light receiving means and corresponding to operations and commands, so as to execute operations and commands based on said operations and commands from said remote controller.

41. The audio video edition system according to claim 37, wherein in order to edit sounds and videos input to the memory disc device, the memory disc device comprises light receiving means for receiving light for operations and commands from an external remote controller as signals for operations and control executed by the interface control means so that said interface control means is remote-controlled by said remote controller through said display control means based on the light signals received by said light receiving means and corresponding to operations and commands, so as to execute operations and commands based on said operations and commands from said remote controller.

42. The audio video edition system according to claim 31, 32, 33, 34, 35, 36, 38, 39, or 41, wherein in order to edit sounds and videos input to the memory disc device, the bus interface means is adapted to connect to one end of a stream bus different from the stream bus between the memory disc device and the digital VCR and to use a specified method to also input from and output to the different stream bus, data corresponding to an AV/subcode digital stream signal and a control signal and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

43. The audio video edition system according to claim 37, wherein in order to edit sounds and videos input to the memory disc device, the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

44. The audio video edition system according to claim 40, wherein in order to edit sounds and videos input to the memory disc device, the bus interface means is adapted to connect to one end of a stream bus different from the stream bus between the memory disc device and the digital VCR and to use a specified method to also input from and output to the different stream bus, data corresponding to an AV/subcode digital stream signal and a control signal, and wherein the memory disc device is controlled and operated for edition by a personal computer having an interface connected to the other end of said different stream bus so as to use said specified method to input from and output to the different stream bus, said data corresponding to said AV/subcode digital stream signal and control signal.

45. The audio video edition system according to claim 1, 2, 3, 4, 5, 8, 9, 10, 11, 13, 14, 16, 18, 19, 20, 21, 23, 24, 25, 27, 29, 30, 31, 32, 33, 34, 35, 36, 38, 39, 41, 43, or 44, wherein the IEEE 1394 bus, which is specified by IEEE, is used as the stream bus.

46. The audio video edition system according to claim 6, wherein the IEEE 1394 bus, which is specified by IEEE, is used as the stream bus.

47. The audio video edition system according to claim 7, wherein the IEEE 1394 bus, which is specified by IEEE, is used as the stream bus.

48. The audio video edition system according to claim 12, wherein the IEEE 1394 bus, which is specified by IEEE, is used as the stream bus.

49. The audio video edition system according to claim 15, wherein the IEEE 1394 bus, which is specified by IEEE, is used as the stream bus.

50. The audio video edition system according to claim 17, wherein the IEEE 1394 bus, which is specified by IEEE, is used as the stream bus.

51. The audio video edition system according to claim 22, wherein the IEEE 1394 bus, which is specified by IEEE, is used as the stream bus.

52. The audio video edition system according to claim 26, wherein the IEEE 1394 bus, which is specified by IEEE, is used as the stream bus.

53. The audio video edition system according to claim 28, wherein the IEEE 1394 bus, which is specified by IEEE, is used as the stream bus.

54. The audio video edition system according to claim 37, wherein the IEEE 1394 bus, which is specified by IEEE, is used as the stream bus.

55. The audio video edition system according to claim 40, is wherein the IEEE 1394 bus, which is specified by IEEE, is used as the stream bus.

56. Then audio video edition system according to claim 42, wherein the IEEE 1394 bus, which is specified by IEEE, is used as the stream bus.
